# EUROPEAN PATENT APPLICATION

(11) **EP 4 322 609 A1**
(43) Date of publication of application: **14.02.2024**
(21) Application number: 22794548.2
(22) Date of filing: 07.04.2022
(51) Int. Cl.: H04W 36/00

(54) **MOBILITY MANAGEMENT METHOD, AND COMMUNICATION APPARATUS**

(30) Priority: 28.04.2021 CN 202110469499
(71) Applicant: Huawei Technologies Co., Ltd., Shenzhen, Guangdong 518129 (CN)
(72) Inventor: LOU, Chong, Shenzhen, Guangdong 518129 (CN); GU, Zhifang, Shenzhen, Guangdong 518129 (CN); HAN, Feng, Shenzhen, Guangdong 518129 (CN); YANG, Xudong, Shenzhen, Guangdong 518129 (CN)
(74) Representative: Gill Jennings & Every LLP
(86) International application number: PCT/CN2022/085652
(87) International publication number: WO 2022/228077

(57) **Abstract**

This application provides a mobility management method and a communication apparatus. The method includes: A first DU receives a first measurement result reported by a terminal device, determines, based on the first measurement result, target beam information for the terminal device to perform mobility management and/or a target cell corresponding to the target beam information, notifies a CU of the target beam information and/or the target cell, and requests, through the CU, a second DU to confirm whether to accept the target beam information and/or the target cell. The first measurement result includes measurement results corresponding to a current serving cell of the terminal device and at least one non-serving cell of the terminal device. When a CU-DU split architecture is used for an access network device, and mobility of the terminal device between cells of different DUs is considered, the foregoing method may enable the first DU and the second DU to keep consistency in determining the target beam information, and support the terminal device in implementing fast mobility management and beam management.

## Description

### CROSS-REFERENCE TO RELATED APPLICATIONS

This application claims priority to Chinese Patent Application No. 202110469499.0, filed with the China National Intellectual Property Administration on April 28, 2021 and entitled "MOBILITY MANAGEMENT METHOD AND COMMUNICATION APPARATUS", which is incorporated herein by reference in its entirety.

### TECHNICAL FIELD

This application relates to the field of wireless communication technologies, and in particular, to a mobility management method and a communication apparatus.

### BACKGROUND

In a high-frequency beamforming scenario, because a terminal device moves and a beam coverage area is limited, the terminal device needs to frequently perform cell handover. However, beam management on a target cell included in a mobility process of the terminal device cannot be effectively performed based on an existing beam management mechanism. Therefore, the terminal device usually needs to first perform the mobility process, and then perform a beam management process of the target cell. The mobility process and the beam management process not only cause a long service interruption of the terminal device, but also cannot quickly match movement of the terminal device and implement fast beam alignment, and may also cause an incorrect handover decision and a long beam training process.

### SUMMARY

This application provides a mobility management method and a communication apparatus, to enable, when a central unit CU-distributed unit DU split architecture is used for an access network device, and mobility of a terminal device between cells of different DUs is considered, a source DU and a target DU to keep consistency in determining target beam information, and support the terminal device in implementing fast mobility management and beam management.

According to a first aspect, an embodiment of this application provides a mobility management method. The method may be performed by a first DU, or may be performed by a component (for example, a chip or a circuit) configured in the first DU. Optionally, the first DU may be a source DU when a terminal device performs mobility management.

The method includes: The first DU receives a first measurement result reported by the terminal device. The first measurement result includes measurement results corresponding to K cells, the K cells include a current serving cell of the terminal device and at least one non-serving cell of the terminal device, and K is a positive integer. The first DU sends a first request message to a CU. The first request message includes target beam information, the target beam information is determined based on the first measurement result, and the target beam information is for the terminal device to perform mobility management. The first DU receives a first response message from the CU. The first response message indicates whether the target beam information is accepted.

In a possible design of the first aspect, the first request message further includes one or more of the following information: a cell identity of a target cell corresponding to the target beam information, identification information of a second DU, or transmission status information of the terminal device. The target cell is a cell of the second DU.

The foregoing technical solution provides a mobility management procedure on an access network side. The first DU may determine, based on the first measurement result reported by the terminal device, target beam information for the terminal device to perform mobility management and/or a target cell corresponding to the target beam information, notify the CU of the target beam information and/or the target cell, and request, through the CU, the second DU to confirm whether the target beam information and/or the target cell is available.

In this technical solution, specifically, the first DU determines the target beam information for the terminal device to perform mobility management and/or the target cell, to effectively reduce signaling overheads between the CU and the DU, and enable the first DU, the CU, and the second DU on the access network side to keep consistency in determining the target beam information for the terminal device to perform mobility management and/or the target cell, support the terminal device in implementing fast mobility management, and implement fast beam alignment to the target cell.

In a possible design of the first aspect, if the target beam information is not accepted, the first response message includes updated target beam information and/or a cell identity of a target cell corresponding to the updated target beam information.

In a possible design of the first aspect, the method further includes: The first DU sends a first indication message to the terminal device. The first indication message includes the target beam information and/or a cell identity of a target cell corresponding to the target beam information.

In a possible design of the first aspect, the method further includes: The first DU receives a first configuration message from the CU. The first configuration message includes a group of configuration information corresponding to the at least one non-serving cell. The first DU sends a second configuration message to the terminal device. The second configuration message includes the group of configuration information corresponding to the at least one non-serving cell.

In a possible design of the first aspect, the group of configuration information includes one or more of the following configuration information of a corresponding cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

According to a second aspect, an embodiment of this application provides a mobility management method. The method may be performed by a CU, or may be performed by a component (for example, a chip or a circuit) configured in the CU.

The method includes: The CU receives a first request message from a first DU. The first request message includes target beam information, and the target beam information is for a terminal device to perform mobility management. The CU sends a second request message to a second DU. The second request message includes the target beam information, and the second request message is for requesting the second DU to confirm the target beam information. The CU receives a second response message from the second DU. The second response message indicates whether the target beam information is accepted. The CU sends a first response message to the first DU. The first response message indicates whether the target beam information is accepted.

In a possible design of the second aspect, the first request message further includes one or more of the following information: a cell identity of a target cell corresponding to the target beam information, identification information of the second DU, or transmission status information of the terminal device. The second request message further includes one or more of the following information: the cell identity of the target cell corresponding to the target beam information, the identification information of the second DU, or the transmission status information of the terminal device. The target cell is a cell of the second DU.

In a possible design of the second aspect, if the target beam information is not accepted, the first response message includes updated target beam information and/or a cell identity of a target cell corresponding to the updated target beam information. The second response message includes the updated target beam information and/or the cell identity of the target cell corresponding to the updated target beam information.

In a possible design of the second aspect, the method further includes: The CU receives a third configuration message from the second DU. The third configuration message includes a group of configuration information corresponding to the target cell. The CU sends a first configuration message to the first DU. The first configuration message includes a group of configuration information corresponding to at least one non-serving cell of the terminal device.

In a possible design of the second aspect, each group of configuration information includes one or more of the following configuration information of a corresponding cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

According to a third aspect, an embodiment of this application provides a mobility management method. The method may be performed by a second DU, or may be performed by a component (for example, a chip or a circuit) configured in the second DU. Optionally, the second DU may be a target DU when a terminal device performs mobility management.

The method includes: The second DU receives a second request message from a CU. The second request message includes target beam information, the target beam information is for the terminal device to perform mobility management, and the second request message is for requesting the second DU to confirm the target beam information. The second DU sends a second response message to the CU. The second response message indicates whether the target beam information is accepted.

In a possible design of the third aspect, the second request message further includes one or more of the following information: a cell identity of a target cell corresponding to the target beam information, identification information of the second DU, or transmission status information of the terminal device. The target cell is a cell of the second DU.

In a possible design of the third aspect, if the second DU does not accept the target beam information, the second response message includes target beam information updated by the second DU and/or a cell identity of a target cell corresponding to the updated target beam information.

In a possible design of the third aspect, the method further includes: The second DU sends a third configuration message to the CU. The third configuration message includes a group of configuration information corresponding to the target cell.

In a possible design of the third aspect, the group of configuration information includes one or more of the following configuration information of the target cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

In a possible design of the third aspect, the method further includes: The second DU receives feedback information from the terminal device. The feedback information indicates that the terminal device successfully receives a first indication message, and the first indication message includes the target beam information and/or the cell identity of the target cell corresponding to the target beam information.

In a possible design of the third aspect, the method further includes: The second DU receives the feedback information based on physical uplink control channel PUCCH resource configuration information corresponding to the target cell.

For beneficial effects in a possible design of the second aspect and the third aspect, refer to corresponding descriptions in the first aspect. Details are not described again.

According to a fourth aspect, an embodiment of this application provides a mobility management method. The method may be performed by a first DU, or may be performed by a component (for example, a chip or a circuit) configured in the first DU. Optionally, the first DU may be a source DU when a terminal device performs mobility management.

The method includes: The first DU receives a first measurement result reported by the terminal device. The first measurement result includes measurement results corresponding to K cells, the K cells include a current serving cell of the terminal device and at least one non-serving cell of the terminal device, and K is a positive integer. The first DU sends a first request message to a CU. The first request message includes at least one piece of candidate beam information, the at least one piece of candidate beam information is determined based on the first measurement result, the first request message is for requesting to determine target beam information based on the at least one piece of candidate beam information, and the target beam information is for the terminal device to perform mobility management. The first DU receives a first response message from the CU. The first response message includes the target beam information.

In a possible design of the fourth aspect, the first request message further includes one or more of the following information: a cell identity of a candidate cell corresponding to the at least one piece of candidate beam information, identification information of a second DU, transmission status information of the terminal device, or a measurement result corresponding to the at least one piece of candidate beam information. The first response message further includes a cell identity of a target cell corresponding to the target beam information. The target cell is a cell of the second DU.

The foregoing technical solution provides a mobility management procedure on an access network side. The first DU may determine, based on the first measurement result reported by the terminal device, at least one piece of candidate beam information and/or a candidate cell corresponding to the at least one piece of candidate beam information, and notify the CU of the at least one piece of candidate beam information and/or the candidate cell corresponding to the at least one piece of candidate beam information, to help the CU determine target beam information and/or a target cell based on the at least one piece of candidate beam information and/or the candidate cell corresponding to the at least one piece of candidate beam information, and request the second DU to confirm whether the target beam information and/or the target cell is available.

In this technical solution, specifically, the CU determines the target beam information for the terminal device to perform mobility management and/or the target cell, to enable the CU to perform unified management and scheduling on cells of DUs belonging to the CU, and enable the first DU, the CU, and the second DU on the access network side to keep consistency in determining the target beam information for the terminal device to perform mobility management and/or the target cell, support the terminal device in implementing fast mobility management, and implement fast beam alignment to the target cell.

In a possible design of the fourth aspect, the method further includes: The first DU sends a first indication message to the terminal device. The first indication message includes the target beam information and/or a cell identity of a target cell corresponding to the target beam information.

In a possible design of the fourth aspect, the method further includes: The first DU receives a first configuration message from the CU. The first configuration message includes a group of configuration information corresponding to the at least one non-serving cell. The first DU sends a second configuration message to the terminal device. The second configuration message includes the group of configuration information corresponding to the at least one non-serving cell.

In a possible design of the fourth aspect, the group of configuration information includes one or more of the following configuration information of a corresponding cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

According to a fifth aspect, an embodiment of this application provides a mobility management method. The method may be performed by a CU, or may be performed by a component (for example, a chip or a circuit) configured in the CU.

The method includes: The CU receives a first request message from a first DU. The first request message includes at least one piece of candidate beam information, the first request message is for requesting to determine target beam information based on the at least one piece of candidate beam information, and the target beam information is for a terminal device to perform mobility management. The CU sends a second request message to a second DU. The second request message includes the target beam information, and the second request message is for requesting the second DU to confirm the target beam information. The CU receives a second response message from the second DU. The second response message indicates whether the target beam information is accepted. The CU sends a first response message to the first DU. The first response message includes the target beam information.

In a possible design of the fifth aspect, the first request message further includes one or more of the following information: a cell identity of a candidate cell respectively corresponding to the at least one piece of candidate beam information, identification information of the second DU, transmission status information of the terminal device, or a measurement result corresponding to the at least one piece of candidate beam information. The target cell is a cell of the second DU. The second request message further includes one or more of the following information: a cell identity of a target cell corresponding to the target beam information, the identification information of the second DU, or the transmission status information of the terminal device. The first response message further includes a cell identity of a target cell corresponding to the target beam information.

In a possible design of the fifth aspect, if the target beam information is not accepted, the first response message includes updated target beam information and/or a cell identity of a target cell corresponding to the updated target beam information. The second response message includes the updated target beam information and/or the cell identity of the target cell corresponding to the updated target beam information.

In a possible design of the fifth aspect, the method further includes: The CU receives a third configuration message from the second DU. The third configuration message includes a group of configuration information corresponding to the target cell. The CU sends a first configuration message to the first DU. The first configuration message includes a group of configuration information corresponding to at least one non-serving cell of the terminal device.

In a possible design of the fifth aspect, each group of configuration information includes one or more of the following configuration information of a corresponding cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

According to a sixth aspect, an embodiment of this application provides a mobility management method. The method may be performed by a second DU, or may be performed by a component (for example, a chip or a circuit) configured in the second DU. Optionally, the second DU may be a target DU when a terminal device performs mobility management.

The method includes: The second DU receives a second request message from a CU. The second request message includes target beam information, the target beam information is for the terminal device to perform mobility management, and the second request message is for requesting the second DU to confirm the target beam information. The second DU sends a second response message to the CU. The second response message indicates whether the target beam information is accepted.

In a possible design of the sixth aspect, the second request message further includes one or more of the following information: a cell identity of a target cell corresponding to the target beam information, identification information of the second DU, or transmission status information of the terminal device. The target cell is a cell of the second DU.

In a possible design of the sixth aspect, if the second DU does not accept the target beam information, the second response message includes target beam information updated by the second DU and/or a cell identity of a target cell corresponding to the updated target beam information.

In a possible design of the sixth aspect, the method further includes: The second DU sends a third configuration message to the CU. The third configuration message includes a group of configuration information corresponding to the target cell.

In a possible design of the sixth aspect, the group of configuration information includes one or more of the following configuration information of the target cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

In a possible design of the sixth aspect, the method further includes: The second DU receives feedback information from the terminal device. The feedback information indicates that the terminal device successfully receives a first indication message, and the first indication message includes the target beam information and/or the cell identity of the target cell corresponding to the target beam information.

In a possible design of the sixth aspect, the method further includes: The second DU receives the feedback information based on physical uplink control channel PUCCH resource configuration information corresponding to the target cell.

For beneficial effects in a possible design of the fifth aspect and the sixth aspect, refer to corresponding descriptions in the first aspect. Details are not described again.

According to a seventh aspect, an embodiment of this application provides a mobility management method. The method may be performed by a first DU, or may be performed by a component (for example, a chip or a circuit) configured in the first DU. Optionally, the first DU may be a source DU when a terminal device performs mobility management.

The method includes: The first DU receives a first measurement result reported by the terminal device. The first measurement result includes measurement results corresponding to K cells, the K cells include a current serving cell of the terminal device and at least one non-serving cell of the terminal device, and K is a positive integer. The first DU sends a first request message to a CU. The first request message includes at least one piece of candidate beam information, the at least one piece of candidate beam information is determined based on the first measurement result, the first request message is for requesting to determine target beam information based on the at least one piece of candidate beam information, and the target beam information is for the terminal device to perform mobility management. The first DU receives a first response message from the CU. The first response message includes the target beam information.

In a possible design of the seventh aspect, the first request message further includes one or more of the following information: a cell identity of a candidate cell corresponding to the at least one piece of candidate beam information, identification information of a second DU, transmission status information of the terminal device, or a measurement result corresponding to the at least one piece of candidate beam information. The first response message further includes a cell identity of a target cell corresponding to the target beam information. The target cell is a cell of the second DU.

The foregoing technical solution provides a mobility management procedure on an access network side. The first DU may determine, based on the first measurement result reported by the terminal device, at least one piece of candidate beam information and/or a candidate cell corresponding to the at least one piece of candidate beam information, and notify the CU of the at least one piece of candidate beam information and/or the candidate cell corresponding to the at least one piece of candidate beam information. Then, the CU notifies the second DU of the at least one candidate beam information and/or the candidate cell corresponding to the at least one candidate beam information. The second DU may determine, based on the at least one piece of candidate beam information and/or the candidate cell corresponding to the at least one piece of candidate beam information, with reference to a load status of a cell of the second DU or signal quality of an uplink reference signal sent by the terminal device to the second DU, appropriate target beam information and/or a target cell corresponding to the target beam information.

In this technical solution, specifically, the second DU determines the target beam information for the terminal device to perform mobility management and/or the target cell, to effectively implement load balancing of the target cell, and enable the first DU, the CU, and the second DU on the access network side to keep consistency in determining the target beam information for the terminal device to perform mobility management and/or the target cell, support the terminal device in implementing fast mobility management, and implement fast beam alignment to the target cell.

In a possible design of the seventh aspect, the method further includes: The first DU sends a first indication message to the terminal device. The first indication message includes the target beam information and/or a cell identity of a target cell corresponding to the target beam information.

In a possible design of the seventh aspect, the method further includes: The first DU receives a first configuration message from the CU. The first configuration message includes a group of configuration information corresponding to the at least one non-serving cell. The first DU sends a second configuration message to the terminal device. The second configuration message includes the group of configuration information corresponding to the at least one non-serving cell.

In a possible design of the seventh aspect, the group of configuration information includes one or more of the following configuration information of a corresponding cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

According to an eighth aspect, an embodiment of this application provides a mobility management method. The method may be performed by a CU, or may be performed by a component (for example, a chip or a circuit) configured in the CU.

The method includes: The CU receives a first request message from a first DU. The first request message includes at least one piece of candidate beam information, the first request message is for requesting to determine target beam information based on the at least one piece of candidate beam information, and the target beam information is for a terminal device to perform mobility management. The CU sends a second request message to a second DU. The second request message includes the at least one piece of candidate beam information, and the second request message is for requesting to determine the target beam information based on the at least one piece of candidate beam information. The CU receives a second response message from the second DU. The second response message includes the target beam information. The CU sends a first response message to the first DU. The first response message includes the target beam information.

In a possible design of the eighth aspect, the first request message further includes one or more of the following information: a cell identity of a candidate cell respectively corresponding to the at least one piece of candidate beam information, identification information of the second DU, transmission status information of the terminal device, or a measurement result corresponding to the at least one piece of candidate beam information. The second request message further includes one or more of the following information: the cell identity of the candidate cell respectively corresponding to the at least one piece of candidate beam information, the identification information of the second DU, the transmission status information of the terminal device, or the measurement result corresponding to the at least one piece of candidate beam information. The first response message further includes a cell identity of a target cell corresponding to the target beam information. The target cell is a cell of the second DU. The second response message further includes the cell identity of the target cell corresponding to the target beam information.

In a possible design of the eighth aspect, the method further includes: The CU receives a third configuration message from the second DU. The third configuration message includes a group of configuration information corresponding to the target cell. The CU sends a first configuration message to the first DU. The first configuration message includes a group of configuration information corresponding to at least one non-serving cell of the terminal device.

In a possible design of the eighth aspect, each group of configuration information includes one or more of the following configuration information of a corresponding cell: reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

According to a ninth aspect, an embodiment of this application provides a mobility management method. The method may be performed by a second DU, or may be performed by a component (for example, a chip or a circuit) configured in the second DU. Optionally, the second DU may be a target DU when a terminal device performs mobility management.

The method includes: The second DU receives a second request message from a CU. The second request message includes at least one piece of candidate beam information, the second request message is for requesting to determine target beam information based on the at least one piece of candidate beam information, and the target beam information is for a terminal device to perform mobility management. The second DU sends a second response message to the CU. The second response message includes the target beam information.

In a possible design of the ninth aspect, the second request message further includes one or more of the following information: a cell identity of a candidate cell respectively corresponding to the at least one piece of candidate beam information, identification information of a second DU, transmission status information of the terminal device, or a measurement result corresponding to the at least one piece of candidate beam information. The second response message further includes a cell identity of a target cell corresponding to the target beam information. The target cell is a cell of the second DU.

In a possible design of the ninth aspect, the method further includes: The second DU sends a third configuration message to the CU. The third configuration message includes a group of configuration information corresponding to the target cell.

In a possible design of the ninth aspect, the group of configuration information includes one or more of the following configuration information of the target cell: reference signal configuration information, measurement configuration information, beam configuration information, quasi co-location QCL information, control resource set CORESET configuration information, search space configuration information, timing advance TA information, terminal device identification information, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

In a possible design of the ninth aspect, the method further includes: The second DU receives feedback information from the terminal device. The feedback information indicates that the terminal device successfully receives a first indication message, and the first indication message includes the target beam information and/or the cell identity of the target cell corresponding to the target beam information.

In a possible design of the ninth aspect, the method further includes: The second DU receives the feedback information based on physical uplink control channel PUCCH resource configuration information corresponding to the target cell.

For beneficial effects in a possible design of the eighth aspect and the ninth aspect, refer to corresponding descriptions in the first aspect. Details are not described again.

According to a tenth aspect, an embodiment of this application provides a communication apparatus. The communication apparatus may have functions of implementing the first DU, the CU, or the second DU in the foregoing aspects. The communication apparatus may be an access network device, or may be a chip included in an access network device.

The functions of the communication apparatus may be implemented by hardware, or may be implemented by hardware executing corresponding software. The hardware or the software includes one or more modules, units, or means (means) corresponding to the functions.

In a possible design, a structure of the communication apparatus includes a processing module and a transceiver module. The processing module is configured to support the communication apparatus in performing corresponding functions of the first DU, the CU, or the second DU in the foregoing aspects. The transceiver module is configured to support communication between the communication apparatus and another communication device. For example, when the communication apparatus is the first DU, the transceiver module may send a first request message to the CU. The communication apparatus may further include a storage module. The storage module is coupled to the processing module, and stores program instructions and data that are necessary for the communication apparatus. In an example, the processing module may be a processor, a communication module may be a transceiver, and the storage module may be a memory. The memory may be integrated with the processor, or may be arranged separately from the processor.

In another possible design, a structure of the communication apparatus includes a processor, and may further include a memory. The processor is coupled to the memory, and may be configured to execute the computer program instructions stored in the memory, to enable the communication apparatus to perform the method in the foregoing aspects. Optionally, the communication apparatus further includes a communication interface, and the processor is coupled to the communication interface. When the communication apparatus is a network device, the communication interface may be a transceiver or an input/output interface. When the communication apparatus is a chip included in the network device, the communication interface may be an input/output interface of the chip. Optionally, the transceiver may be a transceiver circuit, and the input/output interface may be an input/output circuit.

According to an eleventh aspect, an embodiment of this application provides a chip system, including a processor. The processor is coupled to a memory, the memory is configured to store a program or instructions, and when the program or the instructions are executed by the processor, the chip system is enabled to implement the method in the foregoing aspects.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be arranged separately from the processor. For example, the memory may be a non-transitory memory, for example, a read-only memory ROM. The memory and the processor may be integrated on a same chip, or may be arranged on different chips respectively.

According to a twelfth aspect, an embodiment of this application provides a computer-readable storage medium. The computer-readable storage medium stores a computer program or instructions, and when the computer program or the instructions are executed, a communication apparatus is enabled to perform the method in the foregoing aspect or any possible design of the foregoing aspects.

According to a thirteenth aspect, an embodiment of this application provides a computer program product. When a communication apparatus executes the computer program product, the communication apparatus is enabled to perform the method in the foregoing aspect or any possible design of the foregoing aspects.

According to a fourteenth aspect, an embodiment of this application provides a communication system. The communication system includes a first DU, a CU, and a second DU. Optionally, the communication system further includes a terminal device. Optionally, the communication system may further include a core network device.

### BRIEF DESCRIPTION OF DRAWINGS

FIG. 1 is a schematic diagram of a network architecture of a communication system to which an embodiment of this application is applicable;
FIG. 2 is a schematic diagram of a CU-DU split architecture used for an access network device according to an embodiment of this application;
FIG. 3 is a schematic flowchart of a mobility management method according to an embodiment of this application;
FIG. 4 is a schematic diagram in which a CU provides configuration information of at least one other cell for a first DU and a terminal device according to an embodiment of this application;
FIG. 5 is a schematic flowchart of another mobility management method according to an embodiment of this application;
FIG. 6 is a schematic flowchart of another mobility management method according to an embodiment of this application;
FIG. 7 and FIG. 8 are schematic diagrams of two possible implementations in which a terminal device confirms, with a second DU, an occasion for performing mobility management according to an embodiment of this application; and
FIG. 9, FIG. 10, and FIG. 11 are schematic structural diagrams of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The technical solutions in embodiments of this application may be applied to various communication systems, for example, a universal mobile telecommunications system (universal mobile telecommunications system, UMTS), a code division multiple access (code division multiple access, CDMA) system, a wireless local area network (WLAN, wireless local area network), a long-term evolution (long-term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, or a communication system applied to the future or another similar communication system.

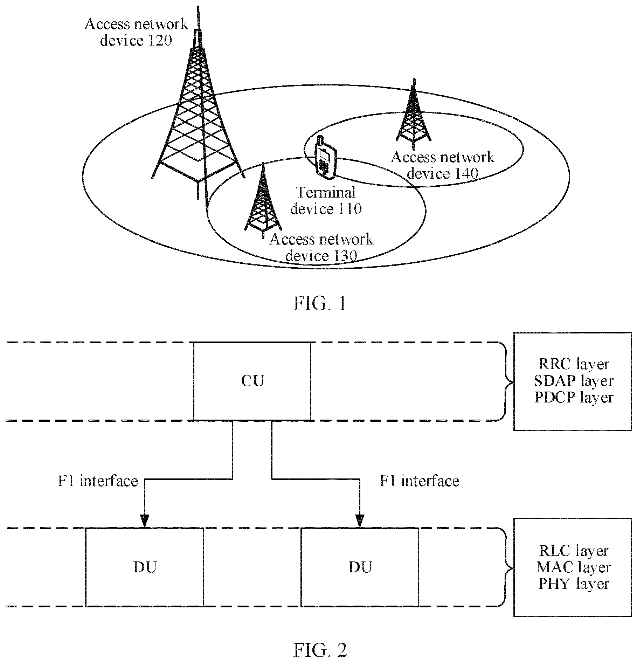

FIG. 1 is a schematic diagram of a network architecture of a communication system according to this application. The communication system includes an access network device and a terminal device. The terminal device is located in coverage of one or more cells (carriers) provided by the access network device, and there may be one or more cells serving the terminal device. When there are a plurality of cells serving the terminal device, the terminal device may work in a carrier aggregation (carrier aggregation, CA), dual connectivity (dual connectivity, DC), or coordinated multipoint transmission/reception (coordinated multipoint transmission/reception, CoMP) manner, and at least one cell may provide the terminal device with radio resources corresponding to more than one transmission parameter set. For example, as shown in FIG. 1, a terminal device 110 is located in a cell of an access network device 120, a cell of an access network device 130, and a cell of an access network device 140 at the same time. The access network device 120 may be a macro base station (for example, a macro eNB), and the access network device 130 and the access network device 140 may be micro base stations (for example, small eNBs). It should be noted that FIG. 1 is merely a schematic diagram. The communication system may further include other network devices such as a core network device, a wireless relay device, and a wireless backhaul device, which are not shown in FIG. 1.

A quantity of access network devices, a quantity of terminal devices, a quantity of core network devices, and a quantity of other network devices included in the communication system are not limited in embodiments of this application.

An access network device in embodiments of this application may correspond to different devices in communication systems of different types or standards, for example, corresponds to an access network device (for example, a gNB or an ng-eNB) in 5G in a 5G system, and corresponds to an access network device (for example, an eNB or an en-gNB) in 4G in a 4G system.

The access network device and the terminal device may communicate with each other through a licensed spectrum, or may communicate with each other through an unlicensed spectrum, or may communicate with each other through both a licensed spectrum and an unlicensed spectrum. The access network device and the terminal device may communicate with each other through a spectrum below 6 gigahertz (gigahertz, GHz), or may communicate with each other through a spectrum above 6 GHz, or may communicate with each other through both a spectrum below 6 GHz and a spectrum above 6 GHz. Spectrum resources used between the access network device and the terminal device are not limited in embodiments of this application.

The access network device and the terminal device in embodiments of this application may be deployed on land, including an indoor or outdoor device, a handheld device, or a vehicle-mounted device; or may be deployed on a water surface; or may be deployed on a plane, a balloon, or an artificial satellite in the air. Application scenarios of the access network device and the terminal device are not limited in embodiments of this application.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the communication network architecture and the emergence of new service scenarios, the technical solutions provided in embodiments of this application are also applicable to similar technical problems.

The following describes some terms in embodiments of this application, to facilitate understanding of a person skilled in the art.
(1) A terminal device included in embodiments of this application may also be referred to as a terminal, user equipment (user equipment, UE), a mobile station, a mobile terminal, or the like, and is a device that provides voice and/or data connectivity to a user, and is, for example, a handheld device or an in-vehicle device that has a wireless connection function. The terminal device is connected to the access network device in a wireless manner, to access the communication system. Currently, some examples of the terminal device include: a mobile phone, a tablet computer, a computer with a wireless transceiver function, a palmtop computer, a mobile Internet device, a wearable device, a virtual reality terminal device, an augmented reality terminal device, a wireless terminal in industrial control, a wireless terminal in unmanned driving, a wireless terminal in remote surgery, a wireless terminal in a smart grid, a wireless terminal in transportation security, a wireless terminal in a smart city, a wireless terminal in a smart home, and the like. A specific technology and a specific device form that are used by the terminal device are not limited in embodiments of this application.

As an example rather than a limitation, the terminal device may alternatively be a wearable device. The wearable device may also be referred to as a wearable intelligent device, an intelligent wearable device, or the like, and is a general term of wearable devices that are intelligently designed and developed for daily wear by applying a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal device may alternatively be a vehicle-mounted module, a vehicle-mounted component, a vehicle-mounted chip, or a vehicle-mounted unit that is built in a vehicle as one or more components or units. The vehicle may use the vehicle-mounted module, a vehicle-mounted module assembly, the vehicle-mounted component, the vehicle-mounted chip, or the vehicle-mounted unit that is built in the vehicle to implement the method in this application.

(2) An access network device in embodiments of this application may also be referred to as a base station, and is a node or a device in a radio access network (radio access network, RAN) configured to connect a terminal device to a wireless network. Currently, some examples of the access network device include: a base station (base station), an evolved base station (evolved NodeB, eNB) in an LTE system or an LTE-Advanced system (LTE-Advanced, LTE-A), a next generation base station (next generation NodeB, gNB) in a 5G communication system, a transmission and reception point (transmission and reception point, TRP), a NodeB (NodeB, NB), a radio network controller (radio network controller, RNC), a base station controller (base station controller, BSC), a base transceiver station (base transceiver station, BTS), a home base station (home (evolved) NodeB, HNB), a baseband unit (base band unit, BBU), a baseband unit (baseband unit, BBU), a wireless fidelity (wireless fidelity, Wi-Fi) access point (access point, AP), a base station in a future mobile communication system, and the like. The access network device may also be a module or unit that implements some functions of the base station, for example, may be a central unit (central unit, CU) or a distributed unit (distributed unit, DU). A specific technology and a specific device form used by the access network device are not limited in embodiments of this application.

A CU-DU split architecture is used for the access network device in embodiments of this application, and the CU-DU split architecture may also be referred to as a distributed deployment architecture. For example, as shown in FIG. 2, the access network device may logically include one CU and one or more DUs, each DU may be connected to the CU by an F1 interface, and information exchange between different DUs may be implemented based on forwarding performed by the CU. The CU and the DU may be physically arranged together, or may be physically arranged separately. This is not limited. The CU may support functions of radio resource control (radio resource control, RRC), a packet data convergence protocol (packet data convergence protocol, PDCP), and a service data adaptation protocol (service data adaptation protocol, SDAP). The DU may support functions of a radio link control (radio link control, RLC) layer protocol, a media access control (medium access control, MAC) layer protocol, and a physical (physical, PHY) layer protocol.

It should be noted that the terms "system" and "network" may be used interchangeably in embodiments of this application, and "a plurality of" means two or more. "A plurality of" means two or more. In view of this, "a plurality of" in this embodiment of this application may also be understood as "at least two". "At least one" may be understood as one or more, for example, one, two, or more. For example, "including at least one" means including one, two, or more, and does not limit items that are included. For example, if at least one of A, B, and C is included, A, B, C, A and B, A and C, B and C, or A, B, and C may be included. Similarly, understanding of the description such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of obj ects. In addition, descriptions of "first" and "second" do not necessarily indicate that objects are different.

The following explains and describes related technical features included in embodiments of this application.

Control resource set (control resource set, CORESET): A control resource set may be understood as a time-frequency resource set, indicates a resource location for physical downlink control channel (physical downlink control channel, PDCCH) transmission, and a quantity of time domain symbols occupied by a PDCCH, a quantity of frequency domain resource blocks, slot allocation, and the like. In time domain, one CORESET may be configured as one or several consecutive OFDM symbols; and in frequency domain, one CORESET may be a group of contiguous or non-contiguous frequency domain resources, including search spaces at different aggregation levels.

Search space (search space, SS): A search space indicates an occurrence periodicity of a CORESET and specific resource information of the CORESET, for example, a starting slot, a starting symbol, and a repetition periodicity, so that the terminal device may monitor a PDCCH at an indicated resource location of the search space. One search space may be associated with at least one CORESET.

Beam management (beam management): A plurality of antennas perform beamforming. By changing a phase and an amplitude of a signal from each antenna, a beam can be enabled to point to a specific direction. In an NR system, all uplink and downlink channels are sent and received based on beams. Therefore, beam management needs to be performed, to enable a transmit end and a receive end to send and receive data on most suitable beams, thereby improving signal strength, avoiding signal interference, and improving communication quality.

A beam management mechanism may include the following process: (1) beam scanning: sending a beam of a reference signal and performing spatial scanning at a predefined time interval; (2) beam measurement/decision: measuring, by a terminal device, the reference signal, and selecting a best beam; (3) beam reporting: reporting, by the terminal device, a beam measurement result; and (4) beam indication: indicating, by an access network device, the terminal device to select a specified beam.

A reference signal for beam management may include: a synchronization signal and physical broadcast channel block (synchronization signal and physical broadcast channel block, SSB) in a downlink direction, a channel state information reference signal (channel state information reference signal, CSI-RS), and a PRACH and a channel sounding reference signal (sounding reference signal, SRS) in an uplink direction. The SSB is applicable to an initial access in idle mode or connected mode, the PRACH is applicable to initial access in idle mode, and the CSI-RS and the SRS are applicable to connected mode.

In embodiments of this application, a physical downlink shared channel (physical downlink shared channel, PDSCH), a physical downlink control channel (physical downlink control channel, PDCCH), a physical uplink shared channel (physical uplink shared channel, PUSCH), and a physical uplink control channel (physical uplink control channel, PUCCH) are merely examples of a downlink data channel, a downlink control channel, an uplink data channel, and an uplink control channel at a physical layer. In different systems and different scenarios, the data channel and the control channel may have different names. This is not limited in this application.

When the CU-DU split architecture is used for the access network device, if the terminal device needs to move from a cell of a source DU to a cell of a target DU that belongs to a same CU as the source DU, the source DU and the target DU may exchange signaling, such as a UE context modification request and response, a UE context setup request and response, and RRC reconfiguration, through an F1 interface between the source DU and the CU and an F1 interface between the target DU and the CU. In the foregoing process, not only signaling overheads are high, but also fast movement of the terminal device cannot be responded to timely. Further, beam management cannot be effectively performed on the target cell to implement beam alignment with the target cell.

For the foregoing problem, this application provides a mobility management method. The method may be applied to a scenario in which a terminal device moves between cells of different DUs of a same CU in a CU-DU split architecture. This scenario may also be referred to as an inter-DU (inter-DU) mobility management scenario.

A first DU, a CU, and a second DU located on a network side may determine, through negotiation, target beam information and/or a target cell of the terminal device based on the method provided in this application, and indicate the target beam information and/or the target cell to the terminal device. In this way, the first DU, the CU, and the second DU may keep consistency in determining the target beam information and/or the target cell, so that the terminal device can perform mobility management based on the target beam information and/or the target cell, to implement quick beam alignment with the target cell.

Further, for whether the target beam information and/or the target cell is determined by the first DU, the CU, or the second DU, this application may include three possible technical solutions. For ease of description, the three possible technical solutions are respectively referred to as a solution 1, a solution 2, and a solution 3. The following separately describes in detail the solution 1, the solution 2, and the solution 3.

It should be noted that, in embodiments of this application, the first DU and the second DU are different DUs belonging to the same CU. The first DU may be a source DU in a mobility management process of the terminal device, that is, a DU to which a current serving cell of the terminal device belongs. The second DU may be a target DU in the mobility management process of the terminal device, that is, a DU to which a target cell for which the terminal device performs mobility management belongs. The target cell may be a cell to which the terminal device is to be handed over, or may be a cell that is to be added or activated by the terminal device as a secondary cell, or may be a cell that is to assist the terminal device in data transmission. None of these is limited in this application.

### Solution 1

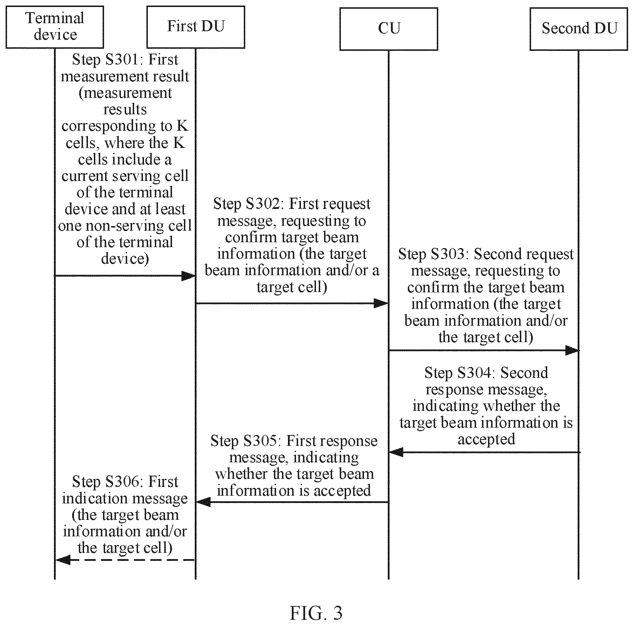

FIG. 3 is a schematic flowchart of a mobility management method according to an embodiment of this application. The method includes the following steps.

Step S301: The first DU receives a first measurement result reported by the terminal device, where the first measurement result includes measurement results corresponding to K cells, and K is a positive integer.

In this embodiment of this application, the K cells include a current serving cell of the terminal device and at least one non-serving cell of the terminal device. The serving cell is a cell of the first DU, the at least one non-serving cell is a cell of at least one other DU that belongs to the same CU as the first DU, and the at least one other DU may include the second DU (that is, the target DU determined below). Optionally, the at least one non-serving cell is a neighboring cell of the serving cell. Optionally, the first measurement result is obtained by the terminal device by measuring downlink reference signals of the K cells.

A measurement result corresponding to the current serving cell of the terminal device may include a measurement result of at least one downlink reference signal of the serving cell, or an average measurement result of downlink reference signals of the serving cell, or an average measurement result of top N downlink reference signals with best signal quality in the downlink reference signals of the serving cell, where N is a positive integer. The measurement result (or the average measurement result) may be channel state information (channel state information, CSI), for example, an indicator indicating reference signal received quality, such as a receive signal received power (receive signal received power, RSRP).

Optionally, the measurement result corresponding to the serving cell may further include a cell identity associated with a downlink reference signal, that is, a cell identity of the serving cell. The cell identity may be a physical cell identity (physical cell identity, PCI).

Using one non-serving cell in the at least one non-serving cell as an example, a measurement result corresponding to the non-serving cell may include a measurement result of at least one downlink reference signal of the non-serving cell, or an average measurement result of downlink reference signals of the non-serving cell, or an average measurement result of N downlink reference signals with best signal quality in the downlink reference signals of the non-serving cell. Similarly, the measurement result (or the average measurement result) may be CSI, for example, an indicator indicating reference signal received quality, such as an RSRP.

Optionally, the measurement result corresponding to the non-serving cell may further include a cell identity associated with a downlink reference signal, that is, a cell identity of the non-serving cell. The cell identity may be a PCI.

It should be noted that in the first measurement result, different downlink reference signals may correspond to different beam directions. Based on a measurement result of a downlink reference signal, signal strength in a beam direction corresponding to the downlink reference signal may be determined. In addition, a cell indication in the first measurement result may be explicitly indicated by including a cell identity, such as a PCI, in a measurement result corresponding to each cell, or may be implicitly indicated by a reference signal identifier. For example, an association relationship between a reference signal and a cell may be configured in advance. If the reference signal identifier is in a range of a to b, the reference signal belongs to a cell 0. If the reference signal identifier is in a range of c to d, the reference signal belongs to a cell 1.

For example, that the terminal device reports the first measurement result to the first DU may be: The terminal device sends a first measurement message to the first DU. The first measurement message includes the first measurement result.

Optionally, the first measurement message may be physical layer signaling (for example, PUCCH signaling), or may be a media access control-control element (medium access control-control element, MAC CE) message or an RRC layer message. This is not limited in this application.

Further, a dedicated scheduling request (scheduling request, SR) resource may be configured for the first measurement message, to trigger an SR process when there is no available uplink grant resource, and send an SR through a PUCCH to indicate the first DU to schedule an uplink grant resource, for sending the first measurement message. After sending the first measurement message or receiving a beam indication from the first DU, the terminal device may cancel the SR process.

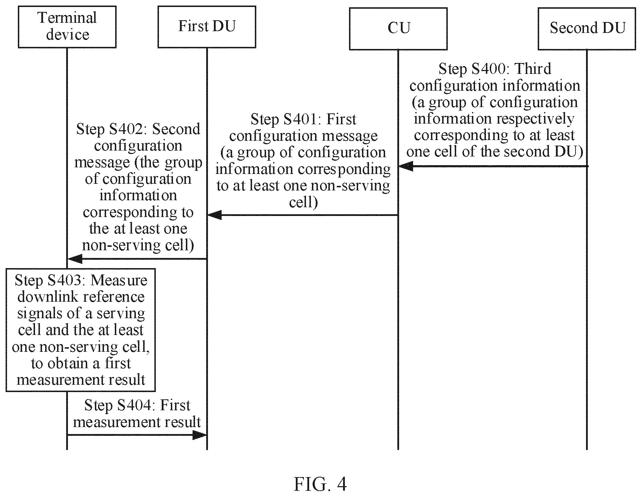

In this embodiment of this application, before the terminal device reports the first measurement result to the first DU, as shown in FIG. 4:
in step S401, the CU may send a first configuration message to the first DU, where the first configuration message includes a group of configuration information corresponding to the at least one non-serving cell. For example, if the at least one non-serving cell includes a neighboring cell 1 and a neighboring cell 2 of the serving cell, the first configuration message may include a group of configuration information corresponding to the neighboring cell 1 and a group of configuration information corresponding to the neighboring cell 2.

Optionally, the first configuration message may further include a group of configuration information corresponding to the serving cell. For example, if the CU updates a related configuration of the serving cell of the first DU (for example, reconfigures a set of to-be-measured reference signals of the serving cell), the CU may also send, to the first DU through the first configuration message, an updated group of configuration information corresponding to the serving cell.

Each group of configuration information may include one or more of the following configuration information of a corresponding cell: reference signal configuration information, measurement configuration information, beam configuration information, quasi co-location (quasi co-location, QCL) information, control resource set CORESET configuration information, search space configuration information, timing advance (timing advance, TA) information, terminal device identification information, sequence information for PDCCH scrambling/descrambling, random access resource configuration information, PUCCH resource configuration information, radio link monitoring configuration information, security-related configuration information, MAC configuration information, and RLC configuration information, PDCP configuration information, or SDAP configuration information. It should be noted that types and specific content of configuration information included in groups of configuration information corresponding to different cells may be the same or may be different. This is not limited in this application. For example, a group of configuration information corresponding to a specific cell may include all types of configuration information listed above, and a group of configuration information corresponding to another cell may include some types of configuration information listed above. Optionally, the terminal device may consider that the part of configuration information that is not included is consistent with that of the current serving cell.

The reference signal configuration information includes a related configuration of at least one reference signal of a corresponding cell. The at least one reference signal may include an SSB, a CSI-RS, an SRS, and the like.

Optionally, the reference signal configuration information may further include information indicating an association relationship between the at least one reference signal and the corresponding cell, to help the terminal device identify which cell a specific reference signal is specifically a reference signal of. For example, the association relationship between the at least one reference signal and the corresponding cell may be indicated in the following two manners:
Manner 1. Explicit cell indication: The reference signal configuration information includes a cell identity associated with the at least one reference signal. The terminal device may determine, based on the cell identity in the reference signal configuration information, a cell associated with the reference signal.
Manner 2. Implicit cell indication: Reference signals are grouped based on associated cells. The reference signal configuration information includes group information of the at least one reference signal. The group information may be an identifier of a group to which the reference signal belongs, or may be a value range of a reference signal identifier. The terminal device may determine, based on the group information of the reference signal in the reference signal configuration information, a cell associated with the reference signal.

The measurement configuration information includes configurations related to measurement and reporting of at least one reference signal of a corresponding cell. For a downlink reference signal (such as an SSB or a CSI-RS), the measurement configuration information may include some information related to reporting of a measurement result, for example, a periodicity of reporting the measurement result, a condition that needs to be met for reporting the measurement result, a resource used for reporting the measurement result, a hysteresis factor, and result filtering information. In some possible embodiments, the resource used for reporting the measurement result may be a resource of a corresponding cell.

The beam configuration information includes downlink beam indication information and/or uplink beam indication information of a corresponding cell. The downlink beam indication information may indicate at least one downlink beam direction of a corresponding cell, and the uplink beam indication information may indicate at least one uplink beam direction of a corresponding cell. For example, the downlink beam indication information may include transmission configuration indication (transmission configuration indication, TCI) state information of at least one physical channel of a corresponding cell, and the TCI state information may include a TCI state identifier and a QCL relationship associated with a TCI state. The uplink beam indication information may include a reference signal identifier, for example, an SRS identifier, an SSB identifier, or a CSI-RS identifier, corresponding to at least one uplink beam.

Optionally, the beam configuration information may further include information indicate an association relationship between the downlink beam indication information/uplink beam indication information and a corresponding cell, so that the terminal device identifies which cell specific downlink beam indication information/uplink beam indication information is specifically beam indication information of. For example, the beam configuration information may include a cell identity of a cell associated with the downlink beam indication information/or the uplink beam indication information. Using the downlink beam indication information as an example, the TCI state information may be represented as a TCI state identifier and a QCL relationship {reference signal, cell identity}, and indicates that there is a QCL relationship between a TCI state and a specific reference signal of a specific cell. The terminal device may determine, based on the cell identity in the beam configuration information, a cell associated with the TCI state information.

The QCL information includes a QCL relationship between at least one physical channel of a corresponding cell and at least one reference signal of the corresponding cell, and the QCL relationship may be indicated by a TCI state. The at least one physical channel may include a PDCCH, a PDSCH, a PUCCH, a PUSCH, and the like. The at least one reference signal may include an SSB, a CSI-RS, an SRS, and the like.

The control resource set CORESET configuration information includes a related configuration of a CORESET of a corresponding cell, for example, a CORESET identifier.

The search space SS configuration information includes a related configuration of a search space of a corresponding cell, for example, an identifier of at least one associated CORESET, a starting slot and a starting symbol, and a periodicity.

The TA configuration information includes TA information of a corresponding cell. The TA information may indicate whether a TA of the corresponding cell is 0, or may be a TA value of the terminal device in the corresponding cell. Optionally, the TA value may be estimated by the access network device based on an uplink reference signal sent by the terminal device.

The terminal device identification information includes terminal device identification information allocated by a corresponding cell to the terminal device, and identifies the terminal device in the corresponding cell. For example, the terminal device identification information may be a cell radio network temporary identifier (cell radio network temporary identifier, C-RNTI), a temporary cell radio network temporary identifier (Temporary C-RNTI, TC-RNTI), or the like.

The sequence information for PDCCH scrambling/descrambling may be different from the terminal device identification information such as a C-RNTI.

The random access resource configuration information includes a resource for a random access process such as a random access preamble (preamble) of a corresponding cell or an available slot for random access. The available slot for random access is for transmitting the random access preamble.

The PUCCH resource configuration information includes a related configuration of a PUCCH resource of a corresponding cell, and the PUCCH resource may be for transmitting a hybrid automatic repeat request (hybrid automatic repeat request, HARQ) feedback, a scheduling request, a CSI measurement result, and the like.

The radio link monitoring configuration information includes a radio link monitoring configuration of a corresponding cell, and is for monitoring radio link quality of the corresponding cell, and detecting whether a communication link of the corresponding cell is faulty, for example, whether a radio link fails.

The security-related configuration information includes a configuration, such as data encryption and/or integrity protection, of a corresponding cell, for example, includes a required key, an algorithm, or a parameter required for updating a key, and is for implementing an encryption and/or integrity protection function on data for communication in the corresponding cell, thereby ensuring security of the communication.

The first configuration message may be a UE context setup request (UE Context Setup Request) message, or may be a UE context modification (UE Context Modification) message or an interface message, such as an RRC message transfer (RRC Message Transfer) message, applicable to between the CU and the DU. This is not limited in this application.

It can be learned that, through the first configuration message, the CU may notify the first DU of the configuration information of the at least one non-serving cell and the configuration information of the serving cell, so that the first DU may notify, the terminal device of the configuration information of the at least one non-serving cell and the configuration information of the serving cell.

Optionally, after receiving the first configuration message from the CU, the first DU may further send a response message corresponding to the first configuration message to the CU, to confirm or negotiate the configuration information in the first configuration message. The confirming the configuration information in the first configuration message may be: The first DU sends an acknowledgment (ACKnowledgment, ACK) or negative acknowledgment (negative ACKnowledgment, NACK) feedback to the CU in response to the received first configuration message. The negotiating the configuration information in the first configuration message may be: The first DU notifies the CU of a possible lack of some configuration information through a response message, and expects that the CU may include the configuration information in the first configuration message when the CU sends the first configuration message a next time.

Further, in step S402, the first DU may send a second configuration message to the terminal device, where the second configuration message includes a group of configuration information corresponding to the at least one non-serving cell. Optionally, the second configuration information may further include a group of configuration information corresponding to the serving cell.

The second configuration message may be any air interface signaling such as an RRC message or a MAC message, for example, a message such as an RRC configuration message, an RRC setup message, an RRC resume message, or a MAC CE message.

It can be learned that, through the second configuration information, the first DU may notify the terminal device of configuration information, such as a reference signal configuration, a measurement configuration, and a beam configuration, of the at least one non-serving cell. Optionally, the terminal device may be further notified of terminal device identification information (for example, a C-RNTI) and/or a random access resource allocated by the at least one non-serving cell to the terminal device.

Optionally, after the first DU sends the second configuration message to the terminal device, the terminal device may further send a response message corresponding to the second configuration message to the first DU, to confirm or negotiate the configuration information in the second configuration message.

In step S403, the terminal device may measure downlink reference signals of the serving cell and the at least one non-serving cell, to obtain a first measurement result, and report the first measurement result to the first DU through step S404.

For example, the terminal device may measure a downlink reference signal of the serving cell based on the reference signal configuration information of the serving cell, to obtain a measurement result corresponding to the serving cell. Similarly, the terminal device may also respectively measure a downlink reference signal of each non-serving cell in the at least one non-serving cell based on the reference signal configuration information of the at least one non-serving cell, to obtain a measurement result corresponding to the at least one non-serving cell.

Optionally, in this embodiment of this application, each DU in a same CU may send configuration information of at least one cell of the DU to the CU. For example, as shown in step S400 in FIG. 4, the second DU may send a third configuration message to the CU, where the third configuration message includes a group of configuration information corresponding to at least one cell of the second DU. The second DU is one of the at least one other DU that belongs to the same CU as the first DU as mentioned above, and is also a target DU determined below. The at least one cell includes the target cell determined below, that is, the third configuration message includes a group of configuration information corresponding to the target cell of the second DU.

Similarly, the first DU may also send a fourth configuration message to the CU, where the fourth configuration message includes a group of configuration information corresponding to at least one cell of the first DU, and the at least one cell of the first DU may include a current serving cell of the terminal device. In this way, the CU may receive configuration messages from DUs belonging to the CU, obtain configuration information of the at least one non-serving cell through summarization based on the configuration messages from the DUs, and then include the configuration information of the at least one non-serving cell in the first configuration message and send the first configuration message to the first DU.

It should be noted that the third configuration message may be actively sent by the second DU to the CU, or may be sent by the DU in response to a request of the CU after the CU requests the second DU. The fourth configuration message and a configuration message sent by another DU to the CU are similar to this.

Step S302: The first DU sends a first request message to a CU, where the first request message includes target beam information, the target beam information is determined based on the first measurement result, the target beam information is for the terminal device to perform mobility management, and the first request message is for requesting to confirm the target beam information.

Correspondingly, the CU receives the first request message from the first DU.

Step S303: The CU sends a second request message to the second DU, where the second request message includes the target beam information, and the second request message is for requesting to confirm the target beam information.

Correspondingly, the second DU receives the second request message from the CU.

In this embodiment of this application, after receiving the first measurement result from the terminal device, the first DU may determine, based on the first measurement result, target beam information for the terminal device to perform mobility management and/or a target cell corresponding to the target beam information. The target beam information may include uplink target beam information, or may include downlink target beam information, or may include uplink target beam information and downlink target beam information. This is not limited. Optionally, if the first measurement result reported by the terminal device includes measurement results corresponding to cells of a plurality of DUs, or the K cells measured by the terminal device belong to a plurality of DUs, the first DU may further determine a target DU based on the measurement results corresponding to the cells of the plurality of DUs, for example, determine a second DU from the plurality of DUs as a target DU. The target DU may be a DU associated with a beam with best signal quality, or a DU associated with a cell with best signal quality.

For example, the first DU may compare measurement results corresponding to cells in the first measurement result, and then select a cell with optimal signal quality and a corresponding beam, to determine the target beam information and/or the target cell.

Further, the first DU may send the first request message to the CU, and notify the CU of the determined target beam information and/or the determined target cell through the first request message. After receiving the first request message, the CU may send the second request message to the second DU, notify the second DU of the target beam information and/or the target cell through the second request message, and request the second DU to confirm the target beam information and/or the target cell.

The first request message may include one or more of the following information: target beam information, a cell identity of a target cell corresponding to the target beam information, identification information of the second DU, or transmission status information of the terminal device.

The second request message may include one or more of the following information: the target beam information, the cell identity of the target cell corresponding to the target beam information, the identification information of the second DU, or the transmission status information of the terminal device.

The cell identity of the target cell may be a PCI of the target cell. The identification information of the second DU indicates that the second DU is a target DU, or that the target cell is a cell belonging to the second DU.

The transmission status information of the terminal device may include one or more of PHY layer status information, RLC layer status information, or MAC layer status information. The PHY layer status information may include status information of a HARQ process that is being used by the terminal device. The status information may be, for example, a new data indication (new data indication, NDI), or may be another parameter indicating that the HARQ process is currently in a state that a new data packet is to be transmitted or an old data packet is retransmitted. The RLC layer status information may include a value of an RLC retransmission counter and an RLC layer-applicable window state for data transmission or reception, for example, a lowest starting position of a window. The value of the RLC retransmission counter indicates a current retransmission count of an RRC entity, and the RLC layer-applicable window state for data transmission or reception indicates a running status of the RLC layer. The MAC layer status information may include a trigger state of a buffer status report (buffer status report, BSR), a value of a counter or a window state used in a related process of a MAC layer, and the like. The trigger state of the BSR indicates whether the BSR has been triggered and is in a suspended state, and the value of the counter or the window state used in the related process of the MAC layer indicates a current running status of the MAC layer.

It can be learned that the first DU exchanges the transmission status information with the second DU, so that a transmission status corresponding to the terminal device on a second DU side after the terminal device performs mobility management is consistent with a transmission status corresponding to the terminal device on a first DU side before the terminal device performs mobility management, thereby avoiding resetting a protocol layer, effectively reducing signaling overheads, and improving efficiency of mobility management.

Step S304: The second DU sends a second response message to the CU, where the second response message indicates whether the target beam information is accepted.

Correspondingly, the CU receives the second response message from the second DU.

Step S305: The CU sends a first response message to the first DU, where the first response message indicates whether the target beam information is accepted.

Correspondingly, the first DU receives the first response message from the CU.

In this embodiment of this application, after receiving the second request message from the CU, the second DU may obtain the target beam information and/or the target cell in the second request message, determine whether the target beam information and/or the target cell is available, further determine whether to accept the target beam information and/or the target cell, and indicate the target beam information and/or the target cell to the CU and the first DU respectively through the second response message and the first response message. Optionally, the first response message and the second response message may include identification information of the second DU, indicating that the second DU is the target DU.

If the target beam information and/or the target cell is available, the second DU may accept the target beam information and/or the target cell, and notify, through the second response message, the CU of a result that the second DU determines to accept the target beam information and/or the target cell, to help the CU notify, through the first response message, the first DU of the result that the second DU determines to accept the target beam information and/or the target cell.

If the target beam information and/or the target cell is unavailable, the second DU may accept the target beam information and/or the target cell, and notify, through the second response message, the CU of a result that the second DU determines not to accept the target beam information and/or the target cell, to help the CU notify, through the first response message, the first DU of the result that the second DU determines not to accept the target beam information and/or the target cell.

Optionally, if the target beam information and/or the target cell is unavailable, the second DU may further re-determine target beam information and/or a target cell, and notify the CU of the updated target beam information and/or the updated target cell through the second response message, and then the CU notifies the first DU of the updated target beam information and/or the updated target cell through the first response message.

For example, the second DU may determine, based on a user load status of the target beam information and/or the target cell, whether the target beam information and/or the target cell is available. For example, if a user load of the target beam information and/or the target cell determined by the first DU is high, the second DU may determine that the target beam information and/or the target cell is unavailable, and indicate not to accept the target beam information and/or the target cell. Optionally, the second DU may re-determine the target beam information and/or the target cell, to update the target beam information and/or the target cell. For example, the second DU may determine a beam direction close to a beam direction indicated by previous target beam information, or a beam direction indicated by previous target beam information is a narrow beam, and target beam information updated by the second DU may indicate a wide beam in a similar direction.

After the first DU receives the first response message from the CU, as shown in the optional step S306 in FIG. 3, the first DU may further send a first indication message to the terminal device. The first indication message may include target beam information and/or a cell identity of a target cell corresponding to the target beam information. Optionally, the first indication message may further include beam information of the serving cell and/or a cell identity of the serving cell.

It may be understood that if the second DU accepts the target beam information and/or the target cell determined by the first DU, the target beam information and/or the target cell included in the first indication message is the target beam information and/or the target cell determined by the first DU based on the first measurement result. If the second DU does not accept the target beam information and/or the target cell determined by the first DU, the first response message and the second response message may include the target beam information updated by the second DU and/or the target cell. Correspondingly, the target beam information and/or the target cell included in the first indication message is the target beam information and/or the target cell updated by the second DU.

After receiving the first indication information from the first DU, the terminal device may perform mobility management based on content indicated by the first indication information. The performing mobility management may be performing any one of the following operations:
(1) performing handover to a target cell;
(2) determining a target cell as a secondary cell;
(3) camping on a serving cell and performing data transmission through a target cell; and
(4) camping on a serving cell, and performing, through the serving cell, data transmission using a beam direction of a target cell.

Optionally, the first indication message includes terminal operation indication information. For example, one of the foregoing four operations is indicated by two-bit information. For example, 00 represents the operation (1), 01 represents the operation (2), 10 represents the operation (3), and 11 represents the operation (4).

Optionally, the terminal operation indication information in the first indication message may be selected by the first DU based on content of the first measurement result. For example, if an RSRP measurement value of a beam of the current serving cell is less than a specified threshold, the terminal operation indication information may indicate the terminal device to perform handover to the target cell. If the RSRP measurement value of the beam of the current serving cell is not less than the specified threshold, the terminal operation indication information may indicate the terminal device to still camp on the original serving cell and perform data transmission through the target cell. It may be understood that in the following solution 2, the terminal operation indication information in the first indication message may be selected by the CU based on at least one piece of candidate beam information or content of a measurement result corresponding to a candidate cell. However, in the following solution 3, the terminal operation indication information in the first indication message may be selected by the second DU based on at least one piece of candidate beam information or content of a measurement result corresponding to a candidate cell. Details are not described below again.

The determining a target cell as a secondary cell may be: adding or activating the target cell as a serving cell of the terminal device, or adding the target cell to a serving cell set of the terminal device. In this case, the original serving cell is a primary cell in the serving cell set, and the target cell is a secondary cell in the serving cell set. For example, the serving cell and the target cell may form a carrier aggregation CA, to jointly serve the terminal device.

The camping on a serving cell and performing data transmission through a target cell may be: The target cell is not added or activated as a serving cell in a CA manner, and instead, data transmission is performed for the terminal device through at least one transmission and reception point (transmission and reception point, TRP) of the target cell. Optionally, from a perspective of the terminal device, the serving cell is still the original serving cell, and a data transmission capability is additionally provided through only the TRP of the target cell. For example, when the terminal device is located at an edge of a cell 1, signal quality is poor, and signal quality of a cell 2 is better, the terminal device may not perform handover to the cell 2, nor add or activate the cell 2 as a serving cell, and instead perform data communication with the cell 2 through only a better beam of the cell 2.

The camping on a serving cell, and performing, through the serving cell, data transmission using a beam direction of a target cell may be: The target cell is not added or activated as a serving cell in a CA manner, and data transmission is not performed for the terminal device through at least one TRP of the target cell, and instead, data transmission is performed still through the original serving cell based on only a beam direction of the TRP of the target cell, so that more beam direction options are provided for the terminal device. Optionally, from a perspective of the terminal device, the serving cell is still the original serving cell, and a reference beam direction is additionally provided through only the TRP of the target cell. For example, when the terminal device determines, by measuring a downlink reference signal of the cell 1 and a downlink reference signal of the cell 2, that signal quality in the beam direction of the cell 2 is better, the terminal device may not perform handover to the cell 2, nor add or activate the cell 2 as a serving cell, and instead perform data communication with the cell 1 through only the better beam direction of the cell 2.

Further, the terminal device may establish a communication connection to the target cell, and communicate with the target cell through a beam direction indicated by the target beam information. For example, in some possible solutions, if the terminal device is handed over from the serving cell to the target cell, the terminal device may disconnect a communication connection to the serving cell, establish a communication connection to the target cell, and communicate with the second DU through the target cell. In some other possible solutions, if the terminal device is handed over from the serving cell to the target cell, the terminal device may temporarily suspend (suspend) a communication connection between the terminal device and the serving cell without disconnecting the communication connection to the serving cell. For example, the terminal device may store a TCI state of the serving cell without releasing configuration information, such as the TCI state, of the serving cell. In this way, when the terminal device is handed over back to the serving cell, the communication connection to the serving cell can be restored without reestablishing the communication connection to the serving cell. For example, instead of reconfiguring the configuration information, such as the TCI state, of the serving cell, the configuration information, such as the TCI state, of the serving cell is directly restored, thereby implementing fast handover and improving handover efficiency. In some other possible solutions, if the terminal device determines to add or activate the target cell as a secondary cell, the first DU may schedule resources, such as a PUSCH and a PDSCH, of the target cell through a PDCCH of the serving cell, to enable the terminal device to communicate with the target cell. In this case, the terminal device may maintain a TCI state of the PDCCH, and align receive beams by using a TCI state of the PDSCH of the target cell and a TCI state of the PUSCH of the target cell.

Optionally, the terminal device may trigger random access to the target cell, or may not trigger random access to the target cell, and directly communicate with the target cell based on the configuration information of the target cell.

Optionally, if the first indication information includes the target beam information and beam information of the serving cell, the terminal device may determine, according to a preconfigured rule or an autonomous selection, whether to camp on the serving cell and perform data transmission through the serving cell, or perform handover to the target cell, or add or activate the target cell as a secondary cell, or camp on the serving cell and perform data transmission through the target cell, or camp on the serving cell and perform data transmission by using a beam direction of the target cell. For example, the terminal device may make a decision based on measured signal quality of a downlink reference signal of the serving cell and measured signal quality of a downlink reference signal of the target cell. If the signal quality of the downlink reference signal of the target cell in the first measurement result is higher than the signal quality of the downlink reference signal of the serving cell, the terminal device may choose to perform handover to the target cell, or add or activate the target cell as a secondary cell, or perform data transmission with assistance of the target cell. Otherwise, the terminal device may camp on the serving cell, and continue to perform data transmission through the serving cell. It should be noted that signal quality of a reference signal mentioned in this application may be cell-level signal quality, or may be reference signal-level signal quality, which is not limited.

Optionally, the terminal device may further exchange functions or roles of the serving cell and the target cell. For example, in a possible solution, the serving cell is a primary cell of the terminal device, and the target cell is a secondary cell of the terminal device. After receiving the first indication message, the terminal device may change, based on the target beam information in the first indication message, the serving cell from the primary cell to the secondary cell, and change the target cell from the secondary cell to the primary cell. For example, when at least one function and a related configuration of the serving cell become ineffective, including, but not limited to, random access, radio link detection, a PUCCH resource, and the like, at least one function and a related configuration of the target cell start to become effective, including, but not limited to, random access, radio link detection, a PUCCH resource, and the like. An effective time may be a moment at which the first indication message is received, or may be a moment at which the first indication message is received plus an offset value. The offset value may be agreed in a protocol or preconfigured by an access network device (for example, the first DU or the CU). For example, the at least one function and the related configuration of the target cell may become effective after the terminal device receives at least one piece of beam information and feeds back a receiving success response to the first DU.

Optionally, the first response message and the second response message may further include terminal device identification information (for example, a C-RNTI) and/or random access resource configuration information allocated by the target cell to the terminal device. In this way, the first indication message may also include the terminal device identification information and/or the random access resource configuration information allocated by the target cell to the terminal device, to help the first DU forward the terminal device identification information and/or the random access resource configuration information to the terminal device.

For example, a possible application scenario in which the first response message, the second response message, or the first indication message carries the terminal device identification information and/or the random access resource configuration information allocated by the target cell to the terminal device includes: (1) The first DU has not previously provided, to the terminal device, the terminal device identification information and/or the random access resource configuration information allocated by the target cell to the terminal device. For example, the second configuration information sent by the first DU to the terminal device includes a group of configuration information corresponding to the target cell, but the group of configuration information corresponding to the target cell does not include the terminal device identification information and/or the random access resource configuration allocated by the target cell to the terminal device. (2) The first DU previously provides, to the terminal device, terminal device identification information and/or random access resource configuration information allocated by the target cell to the terminal device, but reserved terminal device identification information is unavailable, or a beam direction corresponding to a pre-allocated random access resource differs greatly from a target beam direction of the target cell.

The first indication message may be physical layer signaling (for example, PDCCH signaling), or may be a MAC CE message or an RRC layer message. This is not limited in this application. The RRC message may be, for example, an RRC configuration message, an RRC setup message, or an RRC resume message.

After the terminal device is handed over to the target cell, in some possible solutions, the terminal device may perform a PDCP data recovery process, to indicate the PDCP layer to retransmit a data packet that is not successfully acknowledged by the RLC layer, and send the data packet through an RLC entity associated with the target cell, to ensure that PDCP data continuity is not affected by interruption. For example, a part of PDCP data between the terminal device and the first DU is not successfully sent. Therefore, when the terminal device performs data communication from the target cell of the second DU, it needs to be ensured that the part of PDCP data is not lost. Therefore, the PDCP data recovery process needs to be triggered.

In some other possible solutions, the terminal device does not need to perform a PDCP data recovery process, or may not perform a process such as an RLC reset or a MAC reset. Because the first DU sends the transmission status information to the second DU, when the terminal device performs data communication with the target cell of the second DU, the terminal device may further continue to communicate with the target cell by using the transmission status of the terminal device on the serving cell of the first DU.

It can be learned from the foregoing content that the solution 1 of this embodiment of this application provides a mobility management procedure on an access network side. The first DU may determine, based on the first measurement result reported by the terminal device, target beam information for the terminal device to perform mobility management and/or a target cell corresponding to the target beam information, notify the CU of the target beam information and/or the target cell, and request, through the CU, the second DU to confirm whether the target beam information and/or the target cell is available. In the solution 1, the first DU determines the target beam information for the terminal device to perform mobility management and/or the target cell, to effectively reduce signaling overheads between the CU and the DU, and enable the first DU, the CU, and the second DU on the access network side to keep consistency in determining the target beam information for the terminal device to perform mobility management and/or the target cell, support the terminal device in implementing fast mobility management, and implement fast beam alignment to the target cell.

### Option 2

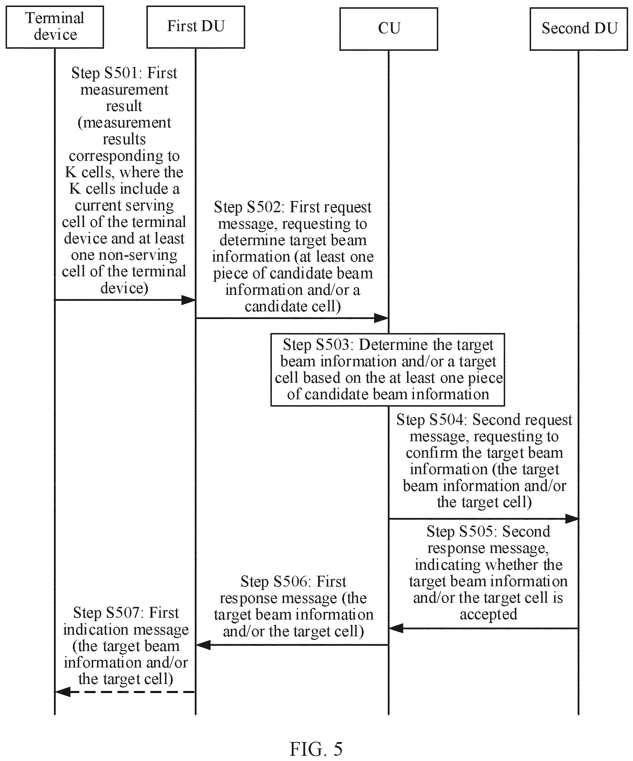

FIG. 5 is a schematic flowchart of a mobility management method according to an embodiment of this application. The method includes the following steps.

Step S501: The first DU receives a first measurement result reported by the terminal device, where the first measurement result includes measurement results corresponding to K cells, and K is a positive integer.

For a specific implementation of step S501, refer to the foregoing related descriptions of step S301. Details are not described herein again.

Step S502: The first DU sends a first request message to the CU, where the first request message includes at least one piece of candidate beam information, the at least one piece of candidate beam information is determined based on the first measurement result, the first request message is for requesting to determine target beam information based on the at least one piece of candidate beam information, and the target beam information is for the terminal device to perform mobility management.

Correspondingly, the CU receives the first request message from the first DU.

In this embodiment of this application, after receiving the first measurement result from the terminal device, the first DU may determine, based on the measurement results corresponding to the K cells in the first measurement result, the at least one piece of candidate beam information and/or a candidate cell corresponding to the at least one piece of candidate beam information. For example, the first DU may determine, based on the measurement results corresponding to the K cells, M candidate beams with good signal quality and L candidate cells corresponding to the M candidate beams, where both M and L are positive integers.

Further, the first DU may send the first request message to the CU, to request to determine the target beam information and/or the target cell based on the at least one piece of candidate beam information in the first request message and/or the candidate cell corresponding to the at least one piece of candidate beam information.

It should be noted that the first request message may explicitly indicate to request the CU or the second DU to determine the target beam information and/or the target cell, or may not explicitly indicate to request the CU or the second DU to determine the target beam information and/or the target cell, and instead, the CU determines whether the CU determines the target beam information and/or the target cell or the second DU determines the target beam information and/or the target cell. It may be understood that the CU determines the target beam information and/or the target cell corresponds to the solution 2, and that the second DU determines the target beam information and/or the target cell corresponds to the solution 3 described below.

The first request message may include one or more of the following information: the at least one piece of candidate beam information, a cell identity of a candidate cell corresponding to the at least one piece of candidate beam information, identification information of the second DU, transmission status information of the terminal device, or a measurement result corresponding to the at least one piece of candidate beam information. The measurement result corresponding to the at least one piece of candidate beam information is a measurement result obtained by the terminal device by measuring a downlink reference signal corresponding to the at least one piece of beam information. The measurement result may be CSI, for example, an indicator indicating reference signal received quality, such as an RSRP. It may be understood that the measurement result corresponding to the at least one piece of candidate beam information is included in the first measurement result.

Step S503: The CU determines target beam information based on the at least one piece of candidate beam information.

Step S504: The CU sends a second request message to the second DU, where the second request message includes the target beam information, and the second request message is for requesting the second DU to confirm the target beam information.

Correspondingly, the second DU receives the second request message from the CU.

The second request message includes one or more of the following information: the target beam information, the cell identity of the target cell corresponding to the target beam information, the identification information of the second DU, or the transmission status information of the terminal device.

In this embodiment of this application, after receiving the first request message from the first DU, the CU may determine the target beam information and/or the target cell based on the at least one piece of candidate beam information and/or the candidate cell corresponding to the at least one piece of candidate beam information, and send the second request message to the second DU.

For example, the CU may determine the target beam information and/or the target cell from the at least one piece of candidate beam information and/or the candidate cell corresponding to the at least one piece of candidate beam information based on a radio resource management (radio resource management, RRM) algorithm or a beam management algorithm, for example, considering load statuses of different beams. For example, the first request message includes a beam 2 of a cell 1 and a beam 5 of a cell 2. If the CU determines that there are a large quantity of users in a direction of the beam 2 of the cell 1 and a load is high, the CU may determine to preferentially perform handover to the beam 5 of the cell 2. If the first request message includes a measurement result corresponding to the at least one piece of candidate beam information, when determining the target beam information and/or the target cell corresponding to the target beam information, the CU may further perform determining based on the measurement result corresponding to the at least one piece of candidate beam information.

Optionally, if there are a plurality of candidate DUs corresponding to the at least one piece of candidate beam information, the CU may further determine a target DU based on the measurement result corresponding to the at least one piece of candidate beam information, for example, determine the second DU as the target DU.

Step S505: The second DU sends a second response message to the CU, where the second response message indicates whether the target beam information is accepted.

Correspondingly, the CU receives the second response message from the second DU.

Step S506: The CU sends a first response message to the first DU, where the first response message includes the target beam information.

Correspondingly, the first DU receives the first response message from the CU.

In this embodiment of this application, after the second DU receives the second request message from the CU, the second DU may determine whether the target beam information and/or the target cell corresponding to the target beam information is available, determine whether to accept the target beam information and/or the target cell corresponding to the target beam information, and send the second response message to the CU. For a specific process, refer to related descriptions in the foregoing steps S304 and S305. Details are not described again.

If the second DU accepts the target beam information and/or the target cell corresponding to the target beam information determined by the CU, the second response message may indicate acceptance of the target beam information and/or the target cell. Correspondingly, the first response message may include the target beam information and/or a cell identity of the target cell corresponding to the target beam information.

If the second DU does not accept the target beam information and/or the target cell corresponding to the target beam information determined by the CU, the second response message may indicate non-acceptance of the target beam information and/or the target cell. Optionally, the second DU may further update the target beam information, and/or determine a target cell corresponding to the updated target beam information. In this way, the second response message may further include the updated target beam information and/or a cell identity of the target cell corresponding to the updated target beam information. The first response message may further include the updated target beam information and/or the cell identity of the target cell corresponding to the updated target beam information.

It may be understood that, after the first DU receives the first response message from the CU, as shown in the optional step S507, the first DU may further send a first indication message to the terminal device, to enable the terminal device to perform mobility management based on the first indication message. For a specific process, refer to the foregoing related descriptions. Details are not described again.

It can be learned from the foregoing content that the solution 2 of this embodiment of this application provides a mobility management procedure on an access network side. The first DU may determine, based on the first measurement result reported by the terminal device, at least one piece of candidate beam information and/or a candidate cell corresponding to the at least one piece of candidate beam information, and notify the CU of the at least one piece of candidate beam information and/or the candidate cell corresponding to the at least one piece of candidate beam information, to help the CU determine target beam information and/or a target cell based on the at least one piece of candidate beam information and/or the candidate cell corresponding to the at least one piece of candidate beam information, and request the second DU to confirm whether the target beam information and/or the target cell is available. In the solution 2, the CU determines the target beam information for the terminal device to perform mobility management and/or the target cell, to enable the CU to perform unified management and scheduling on cells of DUs belonging to the CU, and enable the first DU, the CU, and the second DU on the access network side to keep consistency in determining the target beam information for the terminal device to perform mobility management and/or the target cell, support the terminal device in implementing fast mobility management, and implement fast beam alignment to the target cell.

### Solution 3

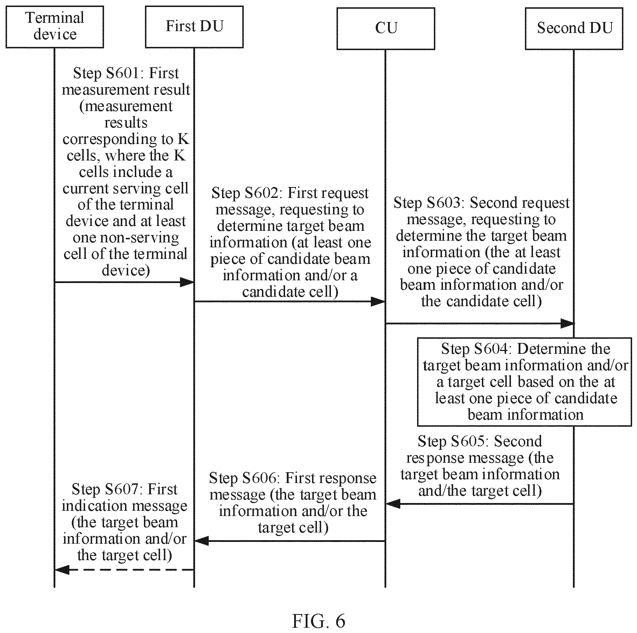

FIG. 6 is a schematic flowchart of a mobility management method according to an embodiment of this application. The method includes the following steps.

Step S601: The first DU receives a first measurement result reported by the terminal device, where the first measurement result includes measurement results corresponding to K cells, and K is a positive integer.

For a specific implementation of step S601, refer to the foregoing related descriptions of step S301. Details are not described herein again.

Step S602: The first DU sends a first request message to the CU, where the first request message includes at least one piece of candidate beam information, the at least one piece of candidate beam information is determined based on the first measurement result, the first request message is for requesting to determine target beam information based on the at least one piece of candidate beam information, and the target beam information is for the terminal device to perform mobility management.

Correspondingly, the CU receives the first request message from the first DU.

The first request message may include one or more of the following information: the at least one piece of candidate beam information, a cell identity of a candidate cell corresponding to the at least one piece of candidate beam information, identification information of the second DU, transmission status information of the terminal device, or a measurement result corresponding to the at least one piece of candidate beam information.

For a specific implementation of step S602, refer to the foregoing related descriptions of step S503. Details are not described herein again.

Step S603: The CU sends a second request message to the second DU, where the second request message includes the at least one piece of candidate beam information, and the second request message is for requesting to determine target beam information based on the at least one piece of candidate beam information.

Correspondingly, the second DU receives the second request message from the CU.

The second request message may include one or more of the following information: the at least one piece of candidate beam information, the cell identity of the candidate cell corresponding to the at least one piece of candidate beam information, the identification information of the second DU, the transmission status information of the terminal device, or the measurement result corresponding to the at least one piece of candidate beam information.

In this embodiment of this application, after receiving the first request message from the first DU, the CU may determine that the second DU determines the target beam information for the terminal device to perform mobility management and/or the target cell, and then notify, through the second request message, the second DU of information carried in the first request message.

Optionally, if there are a plurality of candidate DUs corresponding to the at least one piece of candidate beam information, the CU may further determine a target DU based on the measurement result corresponding to the at least one piece of candidate beam information, for example, determine the second DU as the target DU, and further send the second request message to the second DU.

Step S604: The second DU determines target beam information and/or a target cell based on the at least one piece of candidate beam information.

In this embodiment of this application, after receiving the second request message from the CU, the second DU may determine, based on the at least one piece of candidate beam information and/or the candidate cell corresponding to the at least one piece of candidate beam information, the target beam information and/or the target cell corresponding to the target beam information.

For example, the second DU may determine, based on an RRM algorithm or a beam management algorithm, for example, considering load statuses of different beams, or with reference to signal quality of an uplink reference signal sent by the terminal device to the second DU, the target beam information and/or the target cell corresponding to the target beam information from the at least one piece of candidate beam information and/or the candidate cell corresponding to the at least one piece of candidate beam information. For example, the first request message includes a beam 2 of a cell 1 and a beam 5 of a cell 2. If the CU determines that there are a large quantity of users in a direction of the beam 2 of the cell 1 and a load is high, the CU may determine to preferentially perform handover to the beam 5 of the cell 2. If the second request message includes a measurement result corresponding to the at least one piece of candidate beam information, when determining the target beam information and/or the target cell corresponding to the target beam information, the second DU may further perform determining based on the measurement result corresponding to the at least one piece of candidate beam information.

Step S605: The second DU sends a second response message to the CU, where the second response message includes the target beam information.

Correspondingly, the CU receives the second response message from the second DU.

In this embodiment of this application, the second DU may notify, through the second response message, the CU of the target beam information and/or the target cell corresponding to the target beam information determined by the second DU. In other words, the second response message may include the target beam information and/or a cell identity of the target cell corresponding to the target beam information determined by the second DU.

Step S606: The CU sends a first response message to the first DU, where the first response message includes the target beam information.

Correspondingly, the first DU receives the first response message from the CU.

In this embodiment of this application, the CU may notify, through the first response message, the first DU of the target beam information and/or the target cell corresponding to the target beam information determined by the second DU. In other words, the first response message may include the target beam information and/or the cell identity of the target cell corresponding to the target beam information determined by the second DU.

It may be understood that, after the first DU receives the first response message from the CU, as shown in the optional step S607, the first DU may further send a first indication message to the terminal device, to enable the terminal device to perform mobility management based on the first indication message. For a specific process, refer to the foregoing related descriptions. Details are not described again.

It can be learned from the foregoing content that the solution 3 of this embodiment of this application provides a mobility management procedure on an access network side. The first DU may determine, based on the first measurement result reported by the terminal device, at least one piece of candidate beam information and/or a candidate cell corresponding to the at least one piece of candidate beam information, and notify the CU of the at least one piece of candidate beam information and/or the candidate cell corresponding to the at least one piece of candidate beam information. Then, the CU notifies the second DU of the at least one candidate beam information and/or the candidate cell corresponding to the at least one candidate beam information. The second DU may determine, based on the at least one piece of candidate beam information and/or the candidate cell corresponding to the at least one piece of candidate beam information, with reference to a load status of a cell of the second DU or signal quality of an uplink reference signal sent by the terminal device to the second DU, appropriate target beam information and/or a target cell corresponding to the target beam information, to effectively implement load balancing of the target cell, and enable the first DU, the CU, and the second DU on the access network side to keep consistency in determining the target beam information for the terminal device to perform mobility management and/or the target cell, support the terminal device in implementing fast mobility management, and implement fast beam alignment to the target cell.

An embodiment of this application further provides another mobility management method. The method is for a terminal device and a target cell of a second DU to confirm an occasion for performing mobility management, to keep understandings of the occasion for performing mobility management consistent between the terminal device and the second DU, thereby avoiding unnecessary data interruption caused by that the second DU does not know an occasion on which the terminal device performs mobility management.

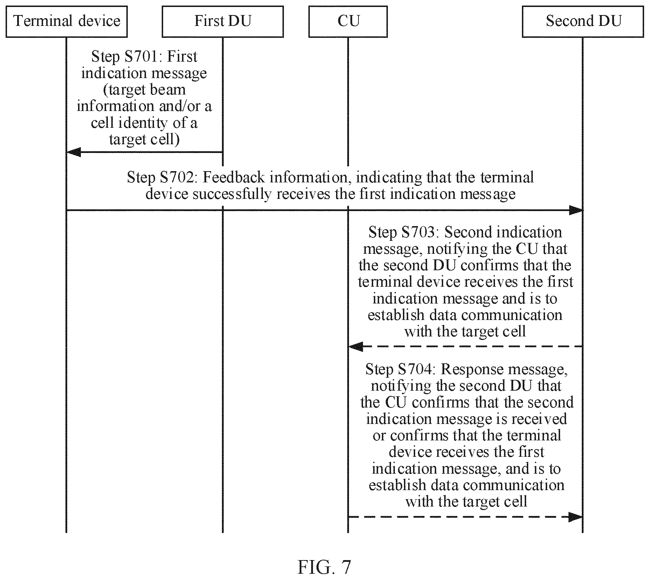

Referring to FIG. 7, a possible implementation of the mobility management method includes the following procedure:

Step S701: The first DU sends a first indication message to the terminal device, where the first indication message includes target beam information and/or a cell identity of a target cell corresponding to the target beam information.

Correspondingly, the terminal device receives the first indication message from the first DU.

Step S702: The terminal device sends feedback information to the second DU, where the feedback information indicates that the terminal device successfully receives the first indication message.

Correspondingly, the second DU receives the feedback information from the terminal device.

In this embodiment of this application, the feedback information may be ACK information, indicating that the terminal device successfully receives the first indication message, and notifying the second DU of an occasion on which the terminal device performs mobility management, that is, an occasion on which the terminal device performs communication by using configuration information of the target cell. The "successful receiving" may also be understood as a meaning such as successful decoding or decoding. Optionally, for an occasion on which the terminal device performs mobility management, a network side may configure an effective time, for example, x slots, for the terminal device, and the terminal device starts to use the configuration information of the target cell x slots after sending the feedback information.

The ACK information may be sent through a PUCCH resource. For example, in some possible technical solutions, a second configuration message sent by the first DU to the terminal device includes PUCCH resource configuration information of the target cell. In this case, the terminal device may send, based on the PUCCH resource configuration information of the target cell, the ACK information to the second DU on a PUCCH resource indicated by the PUCCH resource configuration information, to enable the second DU to learn that the terminal device is to perform mobility management, for example, is to perform handover to the target cell, or is to add or activate the target cell as a serving cell, or is to perform data transmission with assistance of the target cell.

It should be noted that, in some possible technical solutions, step 702 may be an optional step. For example, by configuring the effective time, the terminal device starts to use the configuration information of the target cell x slots after the first indication message is sent/received. Correspondingly, the second DU may consider that the terminal device starts to use the configuration information of the target cell x slots after the first indication message is sent/received. In this way, based on the foregoing configuration or agreement, the step of sending/receiving feedback information between the terminal device and the second DU may be omitted.

Optionally, after the second DU receives the ACK information from the terminal device, as shown in the optional step S703 in FIG. 7, the second DU may further send a second indication message to the CU, to notify the CU that the second DU confirms that the terminal device receives the first indication message and is to establish data communication with the target cell of the second DU. In this way, the CU may determine, based on the second indication message, that the terminal device has completed mobility management on the target beam information and/or the target cell. Further, as shown in the optional step S704 in FIG. 7, after receiving the second indication message from the second DU, the CU may further send a response message corresponding to the second indication message to the second DU, to notify the second DU that the CU confirms that the second indication message is received, or the CU confirms that the terminal device receives the first indication message and is to establish data communication with the target cell of the second DU.

Optionally, if the terminal device does not receive the first indication message successfully, the terminal device may send feedback information to the first DU. In this case, the feedback information may be NACK information, indicating that the terminal device does not receive the first indication message successfully. The NACK information may be sent through a PUCCH resource. For example, the terminal device may send, based on PUCCH resource configuration information of a current serving cell, the NACK information to the first DU on a PUCCH resource indicated by the PUCCH resource configuration information, to enable the first DU to retransmit the first indication message based on the NACK information.

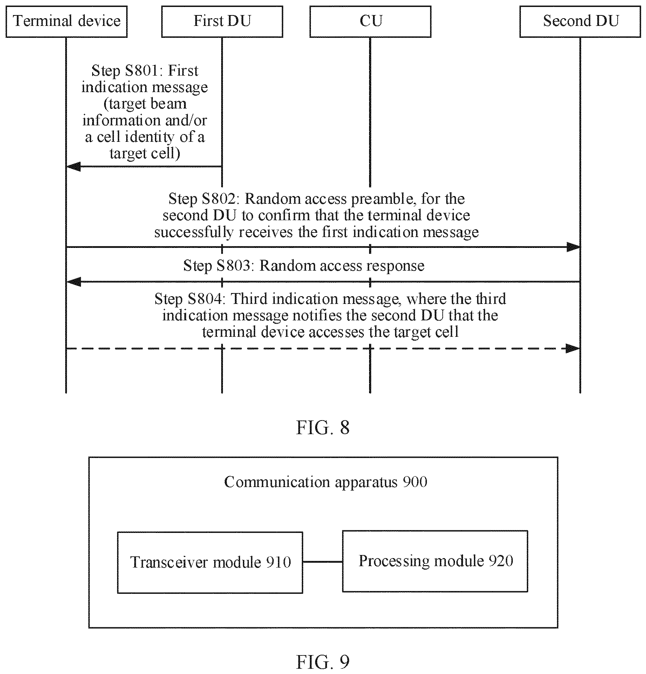

Referring to FIG. 8, another possible implementation of the mobility management method includes the following procedure:

Step S801: The first DU sends a first indication message to the terminal device, where the first indication message includes target beam information and/or a cell identity of a target cell corresponding to the target beam information.

Correspondingly, the terminal device receives the first indication message from the first DU.

Step S802: The terminal device sends a random access preamble to the second DU, where the random access preamble is for the second DU to confirm that the terminal device successfully receives the first indication message.

Correspondingly, the second DU receives the random access preamble from the terminal device.

The random access preamble is included in random access resource configuration information of the target cell, and is for the terminal device to initiate a random access process to the target cell. If the second DU receives the random access preamble, it may be considered that the terminal device establishes a communication connection to the target cell, and data communication may be performed. As described above, the random access resource configuration information of the target cell may be sent to the terminal device through a second configuration message or the first indication message. Details are not described again.

Optionally, if the terminal device does not receive the first indication message, the terminal device may not make a response. If a network side does not receive a response within a period of time, the network side may resend the first indication message. For example, if the second DU does not receive a response within a period of time, the second DU may notify the first DU of resending the first indication message.

Optionally, if the terminal device receives the first indication message, but does not decode the first indication message successfully, the terminal device may send a response to indicate the network side to perform retransmission. For example, the terminal device may send a response to the first DU, to help the first DU resend the first indication message.

Step S803: The second DU sends a random access response (random access response, RAR) to the terminal device, where the RAR is in response to the random access preamble.

Correspondingly, the terminal device receives the RAR from the second DU.

The RAR may include one or more of the following information: an uplink grant resource of the target cell, terminal device identification information allocated by the target cell to the terminal device, and TA information corresponding to the target cell.

The uplink grant resource is for the terminal device to perform subsequent data transmission with the target cell. The terminal device identification information identifies the terminal device in the target cell. It should be noted that if the second configuration message or the first indication message includes terminal device identification information (for example, a C-RNTI) allocated by the target cell to the terminal device, the RAR may include terminal device identification information reallocated by the target cell to the terminal device (for example, the previously allocated terminal device identification information may be unavailable), or may not include the terminal device identification information. The TA information indicates a timing advance used when the terminal device performs uplink sending in the target cell, to help the target cell perform time domain alignment when receiving an uplink signal.

Optionally, the random access preamble may be a contention-based random access preamble. When the random preamble is a contention-based random access preamble, because the second DU cannot identify the terminal device through the random access preamble, as shown in the optional step S804 in FIG. 8, the terminal device may send a third indication message to the second DU. The third indication message notifies the second DU that the terminal device accesses the target cell of the second DU. The third indication message may include terminal device identification information allocated by the target cell to the terminal device, to enable the second DU to identify, based on the terminal device identification information, that the terminal device accesses the target cell. Optionally, the third indication message may be a MAC CE message.

It can be learned from the foregoing content that in this embodiment of this application, according to the method shown in FIG. 7 or FIG. 8, the second DU may be enabled to determine an occasion for the terminal device to perform mobility management, to perform data communication with the terminal device by using a target beam of the target cell, thereby avoiding data interruption.

It should be noted that the methods shown in FIG. 7 and FIG. 8 may be combined with the solution 1, solution 2, or solution 3, or may be implemented as independent methods. This is not limited in this application.

An embodiment of this application further provides a communication apparatus. FIG. 9 is a schematic diagram of a structure of a communication apparatus according to an embodiment of this application. A communication apparatus 900 includes a transceiver module 910 and a processing module 920. The communication apparatus may also be configured to implement a function of the first DU, the CU, or the second DU in any one of the foregoing method embodiments. For example, the communication apparatus may be the first DU, or the CU, or the second DU, or a chip or a circuit included in the first DU, or a chip or a circuit included in the CU, or a chip or a circuit included in the second DU.

For example, when the communication apparatus performs the operations or steps corresponding to the first DU in the method embodiment shown in FIG. 3, the transceiver module 910 is configured to receive a first measurement result reported by a terminal device, where the first measurement result includes measurement results corresponding to K cells, the K cells include a current serving cell of the terminal device and at least one non-serving cell of the terminal device, and K is a positive integer; the processing module 920 is configured to determine target beam information based on the first measurement result; and the transceiver module 910 is further configured to send a first request message to a CU, where the first request message includes the target beam information, and the target beam information is for the terminal device to perform mobility management; and receive a first response message from the CU, where the first response message indicates whether the target beam information is accepted.

When the communication apparatus performs the operations or steps corresponding to the CU in the method embodiment shown in FIG. 3, the transceiver module 910 is configured to: receive a first request message from a first DU, where the first request message includes target beam information, and the target beam information is for a terminal device to perform mobility management; send a second request message to a second DU, where the second request message includes the target beam information, and the second request message is for requesting the second DU to confirm the target beam information; receive a second response message from the second DU, where the second response message indicates whether the target beam information is accepted; and send a first response message to the first DU, where the first response message indicates whether the target beam information is accepted.

When the communication apparatus performs the operations or steps corresponding to the second DU in the method embodiment shown in FIG. 3, the transceiver module 910 is configured to receive a second request message from a CU, where the second request message includes target beam information, the target beam information is for a terminal device to perform mobility management, and the second request message is for requesting the second DU to confirm the target beam information; the processing module 920 is configured to determine whether to accept the target beam information; and the transceiver module 910 is further configured to send a second response message to the CU, where the second response message indicates whether the target beam information is accepted.

When the communication apparatus performs the operations or steps corresponding to the first DU in the method embodiment shown in FIG. 5, the transceiver module 910 is configured to receive a first measurement result reported by a terminal device, where the first measurement result includes measurement results corresponding to K cells, the K cells include a current serving cell of the terminal device and at least one non-serving cell of the terminal device, and K is a positive integer; the processing module 920 is configured to determine at least one piece of candidate beam information based on the first measurement result; and the transceiver module 910 is further configured to send a first request message to a CU, where the first request message includes the at least one piece of candidate beam information, the first request message is for requesting to determine target beam information based on the at least one piece of candidate beam information, and the target beam information is for the terminal device to perform mobility management; and receive a first response message from the CU, where the first response message includes the target beam information.

When the communication apparatus performs the operations or steps corresponding to the CU in the method embodiment shown in FIG. 5, the transceiver module 910 is configured for the CU to receive a first request message from a first DU, where the first request message includes at least one piece of candidate beam information, the first request message is for requesting to determine target beam information based on the at least one piece of candidate beam information, and the target beam information is for a terminal device to perform mobility management; the processing module 920 is configured to determine the target beam information based on the at least one piece of candidate beam information; and the transceiver module 910 is further configured to: send a second request message to a second DU, where the second request message includes the target beam information, and the second request message is for requesting the second DU to confirm the target beam information; receive a second response message from the second DU, where the second response message indicates whether the target beam information is accepted; and send a first response message to the first DU, where the first response message includes the target beam information.

When the communication apparatus performs the operations or steps corresponding to the second DU in the method embodiment shown in FIG. 5, the transceiver module 910 is configured to receive a second request message from a CU, where the second request message includes target beam information, the target beam information is for a terminal device to perform mobility management, and the second request message is for requesting the second DU to confirm the target beam information; the processing module 920 is configured to determine whether to accept the target beam information; and the transceiver module 910 is further configured to send a second response message to the CU, where the second response message indicates whether the target beam information is accepted.

When the communication apparatus performs the operations or steps corresponding to the first DU in the method embodiment shown in FIG. 6, the transceiver module 910 is configured to receive a first measurement result reported by a terminal device, where the first measurement result includes measurement results corresponding to K cells, the K cells include a current serving cell of the terminal device and at least one non-serving cell of the terminal device, and K is a positive integer; the processing module 920 is configured to determine at least one piece of candidate beam information based on the first measurement result; and the transceiver module 910 is further configured to send a first request message to a CU, where the first request message includes the at least one piece of candidate beam information, the first request message is for requesting to determine target beam information based on the at least one piece of candidate beam information, and the target beam information is for the terminal device to perform mobility management; and receive a first response message from the CU, where the first response message includes the target beam information.

When the communication apparatus performs the operations or steps corresponding to the CU in the method embodiment shown in FIG. 6, the transceiver module 910 is configured to receive a first request message from a first DU, where the first request message includes at least one piece of candidate beam information, the first request message is for requesting to determine target beam information based on the at least one piece of candidate beam information, and the target beam information is for a terminal device to perform mobility management; send a second request message to a second DU, where the second request message includes the at least one piece of candidate beam information, and the second request message is for requesting to determine the target beam information based on the at least one piece of candidate beam information; receive a second response message from the second DU, where the second response message includes the target beam information; and send a first response message to the first DU, where the first response message includes the target beam information.

When the communication apparatus performs the operations or steps corresponding to the second DU in the method embodiment shown in FIG. 6, the transceiver module 910 is configured to receive a second request message from a CU, where the second request message includes at least one piece of candidate beam information, the second request message is for requesting to determine target beam information based on the at least one piece of candidate beam information, and the target beam information for a terminal device to perform mobility management; the processing module 920 is configured to determine the target beam information based on the at least one piece of candidate beam information; and the transceiver module 910 is further configured to send a second response message to the CU, where the second response message includes the target beam information.

The processing module 920 in the communication apparatus may be implemented by at least one processor or a processor-related circuit component, and the transceiver module 910 may be implemented by at least one transceiver, a transceiver-related circuit component, or a communication interface. Operations and/or functions of the modules in the communication apparatus are respectively for implementing corresponding procedures of the methods shown in FIG. 3 to FIG. 8. For brevity, details are not described herein again. Optionally, the communication apparatus may further include a storage module. The storage module may be configured to store data and/or instructions. The transceiver module 910 and/or the processing module 920 may read the data and/or the instructions in the storage module, to enable the communication apparatus to implement a corresponding method. The storage module may be implemented, for example, by at least one memory.

The storage module, the processing module, and the transceiver module may exist separately, or all or some of the modules may be integrated. For example, the storage module and the processing module are integrated, or the processing module and the transceiver module are integrated.

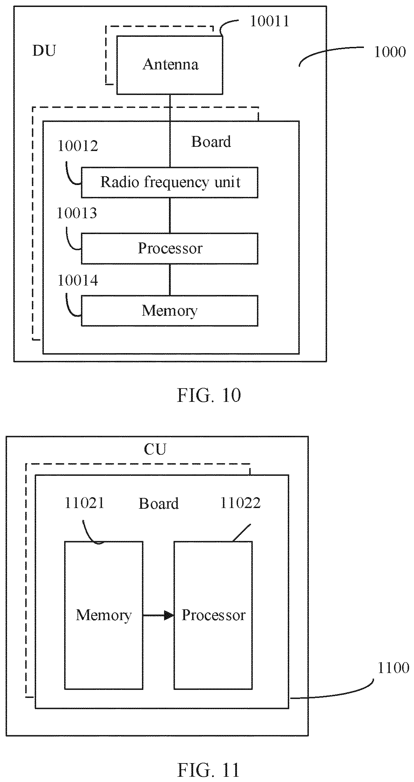

FIG. 10 is a schematic diagram of another structure of a communication apparatus according to an embodiment of this application. The communication apparatus may be specifically a DU in an access network device, and is configured to implement functions of the first DU or the second DU in any one of the foregoing method embodiments.

The DU 1000 may include at least one antenna 10011, at least one radio frequency unit 10012, at least one processor 10013, and at least one memory 10014. The DU 1000 is mainly configured to send and receive a radio frequency signal, perform conversion between a radio frequency signal and a baseband signal, and perform partial baseband processing.

In an embodiment, the DU 1000 may include one or more boards. A plurality of boards may jointly support a radio access network (for example, a 5G network) with a single access indication, or may respectively support radio access networks (for example, an LTE network, a 5G network, or another network) with different access standards. The memory 10014 and the processor 10013 may serve one or more boards. In other words, a memory and a processor may be arranged on each board. Alternatively, a plurality of boards may share a same memory and a same processor. In addition, a necessary circuit may further be arranged on each board.

FIG. 11 is a schematic diagram of another structure of a communication apparatus according to an embodiment of this application. The communication apparatus may be specifically a CU in an access network device, and is configured to implement functions of the CU in any one of the foregoing method embodiments.

The CU 1100 may include at least one memory 11021 and at least one processor 11022. The CU 1100 is mainly configured to perform baseband processing, control a base station, and so on. The CU 1100 is a control center of the base station, and may also be referred to as a processing unit. For example, the CU 1100 may be configured to control the base station to perform the operations or steps corresponding to the CU in the methods shown in FIG. 3 to FIG. 8.

In an embodiment, the CU 1100 may include one or more boards. A plurality of boards may jointly support a radio access network (for example, a 5G network) with a single access indication, or may respectively support radio access networks (for example, an LTE network, a 5G network, or another network) with different access standards. The memory 11021 and the processor 11022 may serve one or more boards. In other words, a memory and a processor may be arranged on each board. Alternatively, a plurality of boards may share a same memory and a same processor. In addition, a necessary circuit may further be arranged on each board.

An embodiment of this application further provides a chip system, including a processor. The processor is coupled to a memory. The memory is configured to store a program or instructions. When the program or the instructions are executed by the processor, the chip system is enabled to implement the method corresponding to the first DU, the CU, or the second DU in any one of the foregoing method embodiments.

Optionally, there may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be arranged separately from the processor. This is not limited in this application. For example, the memory may be a non-transitory processor, for example, a read-only memory ROM. The memory and the processor may be integrated into a same chip, or may be separately arranged on different chips. A type of the memory and a manner of disposing the memory and the processor are not specifically limited in this application.

For example, the chip system may be a field programmable gate array (field programmable gate array, FPGA), an application-specific integrated circuit (application specific integrated circuit, ASIC), a system on a chip (system on a chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium. The computer storage medium stores computer-readable instructions. When a computer reads and executes the computer-readable instructions, the computer is enabled to perform the method according to any one of the foregoing method embodiments.

An embodiment of this application further provides a computer program product. When a computer reads and executes the computer program product, the computer is enabled to perform the method according to any one of the foregoing method embodiments.

An embodiment of this application further provides a communication system. The communication system includes a first DU, a CU, and a second DU. The first DU, the CU, and the second DU cooperate with each other to implement the method in any one of the foregoing method embodiments. Optionally, the communication system may further include a terminal device.

It should be understood that, the processor in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory, an erasable programmable read-only memory, an electrically erasable programmable read-only memory, or a flash memory. The volatile memory may be a random access memory (random access memory, RAM), used as an external cache. For example but not for limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory.

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that various numeral sequence numbers in embodiments of this application are merely for differentiation for ease of description. Sequence numbers of the foregoing processes or steps do not mean execution sequences. The execution sequences of the processes or steps should be determined based on functions and internal logic of the processes or steps, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In the embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

## Claims

1. A mobility management method, wherein the method is applied to a first distributed unit DU, and the method comprises:
receiving a first measurement result reported by a terminal device, wherein the first measurement result comprises measurement results corresponding to K cells, the K cells comprise a current serving cell of the terminal device and at least one non-serving cell of the terminal device, and K is a positive integer;
sending a first request message to a central unit CU, wherein the first request message comprises target beam information, the target beam information is determined based on the first measurement result, and the target beam information is for the terminal device to perform mobility management; and
receiving a first response message from the CU, wherein the first response message indicates whether the target beam information is accepted.

2. The method according to claim 1, wherein the first request message further comprises one or more of the following information: a cell identity of a target cell corresponding to the target beam information, identification information of a second DU, or transmission status information of the terminal device, and the target cell is a cell of the second DU.

3. The method according to claim 1 or 2, wherein if the target beam information is not accepted, the first response message comprises updated target beam information and/or a cell identity of a target cell corresponding to the updated target beam information.

4. The method according to any one of claims 1 to 3, wherein the method further comprises:
sending a first indication message to the terminal device, wherein the first indication message comprises the target beam information and/or a cell identity of a target cell corresponding to the target beam information.

5. The method according to any one of claims 1 to 4, wherein the method further comprises:
receiving a first configuration message from the CU, wherein the first configuration message comprises a group of configuration information corresponding to the at least one non-serving cell; and
sending a second configuration message to the terminal device, wherein the second configuration message comprises the group of configuration information corresponding to the at least one non-serving cell.

6. The method according to claim 5, wherein the group of configuration information comprises one or more of the following configuration information of a corresponding cell:
reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

7. A mobility management method, wherein the method is applied to a central unit CU, and the method comprises:
receiving a first request message from a first distributed unit DU, wherein the first request message comprises target beam information, and the target beam information is for a terminal device to perform mobility management;
sending a second request message to a second DU, wherein the second request message comprises the target beam information, and the second request message is for requesting the second DU to confirm the target beam information;
receiving a second response message from the second DU, wherein the second response message indicates whether the target beam information is accepted; and
sending a first response message to the first DU, wherein the first response message indicates whether the target beam information is accepted.

8. The method according to claim 7, wherein the first request message further comprises one or more of the following information: a cell identity of a target cell corresponding to the target beam information, identification information of the second DU, or transmission status information of the terminal device; and
the second request message further comprises one or more of the following information: the cell identity of the target cell corresponding to the target beam information, the identification information of the second DU, or the transmission status information of the terminal device, and the target cell is a cell of the second DU.

9. The method according to claim 7 or 8, wherein if the target beam information is not accepted, the first response message comprises updated target beam information and/or a cell identity of a target cell corresponding to the updated target beam information; and
the second response message comprises the updated target beam information and/or the cell identity of the target cell corresponding to the updated target beam information.

10. The method according to any one of claims 7 to 9, wherein the method further comprises:
receiving a third configuration message from the second DU, wherein the third configuration message comprises a group of configuration information corresponding to the target cell; and
sending a first configuration message to the first DU, wherein the first configuration message comprises a group of configuration information corresponding to at least one non-serving cell of the terminal device.

11. The method according to claim 10, wherein each group of configuration information comprises one or more of the following configuration information of a corresponding cell:
reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

12. A mobility management method, wherein the method is applied to a second distributed unit DU, and the method comprises:
receiving a second request message from a central unit CU, wherein the second request message comprises target beam information, the target beam information is for a terminal device to perform mobility management, and the second request message is for requesting the second DU to confirm the target beam information; and
sending a second response message to the CU, wherein the second response message indicates whether the target beam information is accepted.

13. The method according to claim 12, wherein the second request message further comprises one or more of the following information: a cell identity of a target cell corresponding to the target beam information, identification information of the second DU, or transmission status information of the terminal device, and the target cell is a cell of the second DU.

14. The method according to claim 12 or 13, wherein if the target beam information is not accepted, the second response message comprises target beam information updated by the second DU and/or a cell identity of a target cell corresponding to the updated target beam information.

15. The method according to claim 13 or 14, wherein the method further comprises:
sending a third configuration message to the CU, wherein the third configuration message comprises a group of configuration information corresponding to the target cell.

16. The method according to claim 15, wherein the group of configuration information comprises one or more of the following configuration information of the target cell:
reference signal configuration information, measurement configuration information, beam configuration information, quasi co-location QCL information, control resource set CORESET configuration information, search space configuration information, timing advance TA information, terminal device identification information, sequence information for PDCCH scrambling/descrambling, random access resource configuration information, physical uplink control channel PUCCH resource configuration information, radio link monitoring configuration information, security-related configuration information, media access control MAC configuration information, and radio link control RLC configuration information, packet data convergence protocol PDCP configuration information, or service data adaptation protocol SDAP configuration information.

17. The method according to any one of claims 12 to 16, wherein the method further comprises:
receiving feedback information from the terminal device, wherein the feedback information indicates that the terminal device successfully receives a first indication message, and the first indication message comprises the target beam information and/or the cell identity of the target cell corresponding to the target beam information.

18. The method according to claim 17, wherein the method further comprises:
receiving the feedback information based on physical uplink control channel PUCCH resource configuration information corresponding to the target cell.

19. A communication apparatus, comprising modules configured to perform the method according to any one of claims 1 to 6.

20. A communication apparatus, comprising modules configured to perform the method according to any one of claims 7 to 11.

21. A communication apparatus, comprising modules configured to perform the method according to any one of claims 12 to 18.

22. A communication apparatus, comprising a processor and a memory, wherein the processor is coupled to the memory, and the processor is configured to control the apparatus to implement the method according to any one of claims 1 to 6.

23. A communication apparatus, comprising a processor and a memory, wherein the processor is coupled to the memory, and the processor is configured to control the apparatus to implement the method according to any one of claims 7 to 11.

24. A communication apparatus, comprising a processor and a memory, wherein the processor is coupled to the memory, and the processor is configured to control the apparatus to implement the method according to any one of claims 12 to 18.

25. A communication apparatus, comprising a processor and an interface circuit, wherein the interface circuit is configured to receive a signal from another communication apparatus other than the communication apparatus and transmit the signal to the processor, or send a signal from the processor to the another communication apparatus other than the communication apparatus, and the processor is configured to implement the method according to any one of claims 1 to 6 through a logic circuit or by executing code instructions.

26. A communication apparatus, comprising a processor and an interface circuit, wherein the interface circuit is configured to receive a signal from another communication apparatus other than the communication apparatus and transmit the signal to the processor, or send a signal from the processor to the another communication apparatus other than the communication apparatus, and the processor is configured to implement the method according to any one of claims 7 to 11 through a logic circuit or by executing code instructions.

27. A communication apparatus, comprising a processor and an interface circuit, wherein the interface circuit is configured to receive a signal from another communication apparatus other than the communication apparatus and transmit the signal to the processor, or send a signal from the processor to the another communication apparatus other than the communication apparatus, and the processor is configured to implement the method according to any one of claims 12 to 18 through a logic circuit or by executing code instructions.

28. A computer-readable storage medium, wherein the storage medium stores a computer program or instructions, and when the computer program or the instructions are executed by a communication apparatus, the method according to any one of claims 1 to 6, or claims 7 to 11, or claims 12 to 18 is implemented.

29. A communication system, comprising the communication apparatus according to any one of claims 19, 22, and 25, the communication apparatus according to any one of claims 20, 23, and 26, and the communication apparatus according to any one of claims 21, 24, and 27.

30. A computer program product, wherein the computer program product comprises instructions, and when the instructions are run by a computer, the method according to any one of claims 1 to 6, 7 to 11, or 12 to 18 is implemented.
